# EUROPÄISCHE PATENTSCHRIFT

(11) **EP 4 413 599 B1**
(45) Veröffentlichungstag und Bekanntmachung des Hinweises auf die Patenterteilung: **14.05.2025**
(21) Anmeldenummer: 22773674.1
(22) Anmeldetag: 07.09.2022
(51) Int. Cl.: H01B 7/00, B60R 16/02, H01B 7/08

(54) **ELEKTRISCHER ÜBERGABESTÜTZPUNKT FÜR KRAFTFAHRZEUGE**
ELECTRICAL TRANSFER SUPPORT POINT FOR MOTOR VEHICLES
POINT DE SUPPORT DE TRANSFERT ÉLECTRIQUE POUR VÉHICULES AUTOMOBILES

(30) Priorität: 04.10.2021 DE 102021125620
(43) Veröffentlichungstag der Anmeldung: 14.08.2024
(73) Patentinhaber: Auto-Kabel Management GmbH, 79688 Hausen i.W. (DE)
(72) Erfinder: KASZUBOWSKI, Franz-Heinz, 41849 Wassenberg (DE)
(74) Vertreter: Cohausz & Florack
(86) Internationale Anmeldenummer: PCT/EP2022/074865
(87) Internationale Veröffentlichungsnummer: WO 2023/057159

(56) Entgegenhaltungen:
- EP-A1- 3 476 660
- EP-B1- 2 018 693
- WO-A1-2006/082238
- DE-A1- 102009 008 389
- US-A1- 2018 268 959
- US-A1- 2019 168 694

## Beschreibung

Der Gegenstand betrifft einen elektrischen Übergabestützpunkt, insbesondere für Kraftfahrzeuge.

Im Zuge der Elektrifizierung der Automobilität werden heutzutage zeitweise Leistungen mehrerer hundert kW über das Fahrzeugnetz transportiert. Bei derart enormen Leistungsspitzen wir d eine dauerhaft sichere Leitung des Stroms und auch der durch Ohm'sche Verluste entstehenden Wärme zunehmend zur Herausforderung. Die Anforderungen an die leitenden Bauteile wie insbesondere Leitungen, Anschlussteile, Verbindungselemente und auch Übergabestützpunkte sind vor diesem Hintergrund im Vergleich zu bisherigen 12V-Bordnetzen enorm angestiegen.

Eine der größten Herausforderungen der Elektrifizierung der Automobilität liegt in der Minimierung der Ladezeiten der involvierten Energiespeicher. Der Tank eines herkömmlichen Fahrzeugs mit Verbrennungsmotor ist innerhalb weniger Minuten mit Brennstoff gefüllt, welcher ausreichend Energie für hunderte Kilometer Fahrdistanz enthält. Anders ist die Lage hingegen bei elektrischen betriebenen Fahrzeugen, bei denen üblicherweise ein elektrischer Akkumulator mit einer hohen Kapazität an einer Ladestation aufgeladen werden muss. Um den Akkumulator möglichst schnell aufzuladen, vorzugsweise deutlich schneller, als dieser nachher im Fahrbetrieb entladen wird, werden hohe Ströme und Spannungen eingesetzt.

Um die notwendigen hohen Ladeleistungen aus der Ladestation in den Fahrzeugakkumulator zu befördern, muss die gesamte Übertragungsstrecke von Ladestationsbuchse über fahrzeugseitige Buchse bis zum Akkumulator sehr gut elektrisch leiten. Insbesondere müssen alle Übergänge zwischen den Einzelkomponenten der Übertragungsstrecke besonders geringe Übergangswiderstände aufweisen.

Leitende Bauteile müssen hohe elektrische und thermische Leitfähigkeiten aufweisen, sowie hohe Wärmekapazitäten. Auch muss die Abgabe großer Mengen an Wärme in die Umgebung möglich sein. Eine lokale Aufheizung aufgrund erhöhter elektrischer und/oder thermischer Widerstände und/oder geringer Wärmekapazität kann fatale Folgen für die Fahrzeugsicherheit bedingen. Die entstehenden, hohen Temperaturen können Brände und/oder Explosionen auslösen.

Ein besonders sensibler Bereich der Fahrzeugelektrik ist naturgemäß der involvierte Energiespeicher und sein direktes elektrisches Umfeld. Die Anschlüsse eines Energiespeichers, üblicherweise eines elektrischen Akkumulators, sind oft dauerhaft mit einem Übergabestützpunkt verbunden. Der Übergabestützpunkt kann insbesondere die Verbindung zwischen dem Energiespeicher und dem übrigen Fahrzeugnetz und/oder einer Ladebuchse herstellen. Die gesamte Leistung, welche in dem Fahrzeug verbraucht wird, fließt im Akkubetrieb über die Anschlüsse des Energiespeichers. Gleiches gilt für den Übergabestützpunkt.

Oft ist insbesondere aus Gründen einer kompakten Verkabelung gewünscht, dass der Übergabestützpunkt eine Änderung der Ausrichtung der Kontakte im Verhältnis zu den Anschlüssen des Energiespeichers ermöglicht. Die zumindest zwei Anschlüsse des Energiespeicher können beispielsweise in einer ersten Richtung voneinander beabstandet sein. Die Anschlüsse des Übergabestützpunkts können voneinander in einer anderen, von der ersten Richtung verschiedenen Richtung beabstandet sein. Hieraus ergeben sich Schwierigkeiten für die elektrischen Eigenschaften des Übergabestützpunktes, insbesondere da die Strompfade der verschiedenen Anschlüsse unterschiedliche geometrische Eigenschaften, insbesondere eine verschiedene Länge, aufweisen. Wünschenswert wäre es, die Strompfade der jeweiligen Anschlüsse aneinander anzugleichen und Ungleichgewichte in der Leitfähigkeit oder anderer elektrischer und thermischer Eigenschaften zu vermeiden. Insbesondere müssen die hohen Anforderungen an die elektrischen und thermischen Eigenschaften des Übergabestützpunktes in dem erforderlichen Maße gewährleistet sein.

Schließlich ist es angesichts der durchgehend hohen Spannungen zwischen den Anschlüssen des Energiespeichers wichtig, dass dieser absolut trocken bleibt und/oder vor anderen Umwelteinflüssen wie beispielsweise oxidierenden Gasen geschützt ist. Vorzugsweise ist der Energiespeicher gegenüber der Umgebung des Fahrzeugs und auch gegenüber dem Fahrzeuginnern abgedichtet. Der Übergabestützpunkt kann insbesondere den Energiespeicher mit dem Fahrzeuginnern verbinden. Dieser muss dementsprechend derart gestaltet sein, dass die Abdichtung des Energiespeichers gegenüber Umwelteinflüssen unbeeinträchtigt bleibt. Der Übergabestützpunkt kann demzufolge auch die Funktion einer Durchführung erfüllen.

US 2018/268959 offenbart einen elektrischen Übergabestützpunkt für Kraftfahrzeuge mit zwei aus einem metallischen Werkstoff gebildeten Verbindungsflachteilen wobei sich die Verbindungsflachteile teilweise in einer gemeinsamen Leiterebene erstrecken. Die Verbindungsflachteile weisen einen ersten und einen zweiten Verbindungsabschnitt auf, dass die ersten Verbindungsabschnitte entlang einer gemeinsamen, sich in der Leiterebene erstreckenden ersten Geraden angeordnet sind, dass die zweiten Verbindungsabschnitte entlang einer gemeinsamen, sich in der Leiterebene erstreckenden zweiten Geraden, angeordnet sind.

Somit lag dem Gegenstand die Aufgabe zugrunde, einen Übergabestützpunkt bereitzustellen, welcher den hohen elektrischen und thermischen Belastungen standhält, die in direkter Verbindung mit dem Energiespeicher heutiger elektrischer Fahrzeuge an ihn einwirken.

Gelöst wird die Aufgabe durch einen Übergabestützpunkt nach Anspruch 1.

Der gegenständliche Übergabestützpunkt umfasst zunächst zumindest zwei Verbindungsflachteile.

Ein Verbindungsflachteil kann hierbei zwei Breitseiten aufweisen, welche einander gegenüberliegend angeordnet sind. Die Breitseiten können beispielsweise im Wesentlichen zueinander parallel ausgerichtet sein. Die zwei Breitseiten können im Wesentlichen die gleiche Form aufweisen. Auch möglich sind Abweichungen zwischen den Formen der Breitseiten. So kann beispielsweise eine der Breitseiten eine geringere Fläche aufweisen als die andere Breitseite des Verbindungsflachteils.

Für das Verbindungsflachteil lässt sich eine Dicke definieren als die Abmessung des Verbindungsflachteils senkrecht zu zumindest einer Breitseite des Verbindungsflachteils. Die Dicke des Verbindungsteils kann über zumindest eine der Breitseiten des Verbindungsteils im Wesentlichen konstant sein. Auch kann die Dichtung über die Breitseite des Verbindungsflachteils variieren.

Daneben umfasst das Verbindungsflachteil Schmalseiten. Die Schmalseiten können die Breitseiten umlaufend umgeben. Die Schmalseiten können in einzelne Schmalseiten unterschieden werden. Auch lässt sich eine einzige, umlaufende Schmalseite definieren. Zumindest eine der Schmalseiten kann im Wesentlichen senkrecht zu zumindest einer Breitseite des Verbindungsflachteils ausgerichtet sein.

Eine im Wesentlichen senkrechte Ausrichtung zweier Flächen kann derart verstanden werden, dass die beiden Flächennormalen auf die beiden Flächen im Wesentlichen senkrecht zueinander ausgerichtet sind.

Ferner ist des zur Beschreibung der geometrischen Beschaffenheit des gegenständlichen Übergabestützpunktes zielführend, eine Leiterebene zu definieren. Die Leiterebene ist nicht im strengen mathematischen Sinn als Ebene mit einer rein zweidimensionalen Ausdehnung zu verstehen. Die Leiterebene kann eine Ausdehnung in allen drei Raumrichtungen aufweisen. Insbesondere kann sich die Leiterebene in zwei zueinander senkrechten Breitrichtungen im Wesentlichen unbegrenzt erstrecken. In einer zu den Breitrichtungen senkrechten Dickenrichtung der Leiterebene kann die Leiterebene eine begrenzte Ausdehnung aufweisen. Diese kann als Dicke der Leiterebene definiert werden. Die Dickenrichtung kann im Folgenden auch Flächennormalen der Leiterebene genannt sein.

Zumindest eines, vorzugsweise die zumindest zwei Verbindungsflachteile erstrecken sind in der Leiterebene. Die Leiterebene kann dabei beispielsweise die im Wesentlichen gleiche Dicke aufweisen, wie zumindest eines der Verbindungsflachteile. Auch kann die Leiterebene dicker oder dünner als zumindest eines der Verbindungsflachteile sein.

Die zumindest zwei Verbindungsflachteile können im Wesentlichen die gleiche Dicke aufweisen. Die zumindest zwei Verbindungsflachteile können ebenfalls zumindest teilweise verschiedene, d. h. voneinander verschiedene Dicken aufweisen

In einer Ausgestaltung sind die zumindest zwei Verbindungsflachteile flächenparallel zueinander ausgerichtet. Hiermit kann insbesondere gemeint sein, dass die Breitseiten der zumindest zwei Verbindungsteile im Wesentlichen parallel zueinander ausgerichtet sind. Zumindest eins der und/oder die zumindest zwei Verbindungsflachteile können parallel zur Leiterebene ausgerichtet sein. Auch kann zumindest eines der Verbindungsflachteile gegenüber der Leiterebene winklig verlaufen. Hiermit kann gemeint sein, dass zumindest eine der Breitseiten des Verbindungsflachteils eine andere Ausrichtung aufweist als die Leiterebene. Beispielsweise kann zwischen der Flächennormalen auf die Breitseite des Verbindungsteils und der Flächennormale der Leiterebene ein Winkel von 5 bis 10 Grad vorliegen. Auch wenn eines der Verbindungsflachteil als mit der Leiterebene parallel definiert ist, kann ein geringer Winkel, beispielsweise von 0,1 bis 5 Grad, zwischen der Flächennormale auf der Breitseite des Verbindungflachteils und der Flächennormale der Leiterebene vorliegen.

Die zumindest zwei Verbindungsflachteile berühren einander nicht. Die zumindest zwei Verbindungsflachteile sind voneinander beanstandet, insbesondere mit einem Spalt. Insbesondere sind die zumindest zwei Verbindungsflachteile voneinander elektrisch isoliert. Die Breitseiten der zumindest zwei Verbindungsflachteile sind im Wesentlichen zueinander überlappungsfrei angeordnet. Insbesondere in einer Draufsicht auf zumindest eine Breitseite zumindest eines der zumindest zwei Verbindungsflachteile ist erkennbar, dass sich die zumindest zwei Verbindungsflachteile einander nicht überlappen. Wenn im Folgenden davon die Rede ist, dass die zumindest zwei Verbindungsflachteile einander nicht überlappen und/oder überlappungsfrei sind, ist damit gemeint, dass die beiden Verbindungsflachteile in Richtung der Flächennormalen auf die Leiterebene und/oder in Richtung der Flächennormalen auf zumindest eines Teils einer Breitseite zumindest eines der zumindest zwei Verbindungsflachteile überlappungsfrei sind. Die zumindest zwei Verbindungsflachteile können einander in Richtung der Flächennormalen auf zumindest einen Teil der Schmalseiten überlappen. Dies ist darauf zurückzuführen, dass die zumindest zwei Verbindungsflachteile in einer Ebene, insbesondere in der Leiterebene, liegen.

Zumindest eines, vorzugsweise die zumindest zwei Verbindungsflachteile weisen jeweils einen ersten und einen zweiten Verbindungsabschnitt auf. Beispielsweise können die Verbindungsabschnitte an einem jeweiligen distalen Ende des jeweiligen Verbindungsflachteils angeordnet sein. Ein Verbindungsabschnitt kann sich dazu eignen, ein elektrisch leitendes Element damit zu verbinden. Ein Verbindungsabschnitt hat eine räumliche Ausdehnung auf der Breitseite der Verbindungsflachteils. Der Verbindungsabschnitt kann an eine Kante der Breitseite angrenzen. Auch kann ein Verbindungsabschnitt umlaufend von davon verschiedenen Bereichen der Breitseite umgeben sein.

Beispielsweise lässt sich das Verbindungsflachteil aufteilen in zumindest zwei Verbindungsabschnitte und einen davon verschiedenen Leitabschnitt. Der Leitabschnitt kann elektrisch zwischen den beiden Verbindungsabschnitten angeordnet sein. Auch kann der Leitabschnitt zumindest einen der Verbindungsabschnitte oder die zumindest zwei Verbindungsabschnitte umfassen.

Es lassen sich pro Verbindungsflachteil ein erster und ein zweiter Verbindungsabschnitt definieren. Der erste und der zweite Verbindungsabschnitt eines gegenständlichen Verbindungsflachteils sind insbesondere überlappungsfrei.

Die ersten Verbindungsabschnitte der zumindest zwei Verbindungsflachteile sind entlang einer gemeinsamen ersten Gerade angeordnet. Beispielsweise sind die ersten Verbindungsabschnitte entlang der gemeinsamen ersten Gerade beabstandet. Die gemeinsame erste Gerade erstreckt sich in der Leiterebene. Die gemeinsame erste Gerade kann insbesondere parallel zu zumindest einer der Breitseiten zumindest eines der Verbindungsflachteile angeordnet sein. Zusätzlich oder alternativ kann die erste gemeinsame Gerade parallel zur Leiterebene angeordnet sein. Die erste gemeinsame Gerade geht insbesondere durch sowohl den ersten Verbindungsabschnitt eines ersten der zumindest zwei Verbindungsflachteile als auch durch den ersten Verbindungsabschnitt eines zweiten der zumindest zwei Verbindungsflachteile. Beispielsweise kann die erste Gerade durch das Zentrum von zumindest dem ersten Verbindungsabschnitt eines ersten und/oder der zumindest zwei Verbindungsflachteile verlaufen. Das Zentrum kann hier beispielsweise als der geometrische Schwerpunkt der Fläche des ersten Verbindungsabschnitts definiert werden.

Die zweiten Verbindungsabschnitte der zumindest zwei Verbindungsflachteile sind entlang einer gemeinsamen zweiten Gerade angeordnet. Beispielsweise sind die zweiten Verbindungsabschnitte entlang der gemeinsamen zweiten Gerade beabstandet. Die gemeinsame zweite Gerade erstreckt sich in der Leiterebene. Die gemeinsame zweite Gerade kann insbesondere parallel zu zumindest einer der Breitseiten zumindest eines der Verbindungsflachteile angeordnet sein. Zusätzlich oder alternativ kann die gemeinsame zweite Gerade parallel zur Leiterebene angeordnet sein. Die zweite gemeinsame Gerade verläuft insbesondere durch sowohl den zweiten Verbindungsabschnitt eines ersten der zumindest zwei Verbindungsflachteile als auch den zweiten Verbindungsabschnitt eines zweiten der zumindest zwei Verbindungsflachteile. Beispielsweise kann die zweite Gerade durch das Zentrum von zumindest dem zweiten Verbindungsabschnitt eines ersten und/oder der zumindest zwei Verbindungsflachteile verlaufen. Das Zentrum kann hier beispielsweise als der geometrische Schwerpunkt der Fläche des zweiten Verbindungsabschnitts definiert werden.

Die ersten Verbindungsabschnitte der zumindest zwei Verbindungsflachteile können auf einer gemeinsamen Seite der zweiten Geraden angeordnet sein. Beispielsweise kann die Leiterebene von der zweiten Gerade in zwei voneinander getrennte Bereiche aufgeteilt werden. In einem dieser zwei Bereiche, dem Erstabschnittsbereich, können sich die zumindest zwei ersten Verbindungsabschnitte der zumindest zwei Verbindungsflachteile befinden. Zumindest einer der Verbindungsabschnitte und/oder die zumindest zwei Verbindungsabschnitte können sich vollständig in dem Erstabschnittsbereich befinden. In diesem Falle verläuft die zweite Gerade durch keinen der ersten Verbindungsabschnitte. Auch kann zumindest einer der zumindest zwei Verbindungsabschnitte nur teilweise in dem Erstabschnittsbereich angeordnet sein, insbesondere, sodass die zweite Gerade durch diesen hindurch verläuft. Die zumindest zwei ersten Verbindungsabschnitte sind jeweils zumindest teilweise in dem Erstabschnittsbereich angeordnet. Insbesondere ist zumindest das jeweilige Zentrum der zumindest zwei ersten Verbindungsabschnitte in dem Erstabschnittsbereich angeordnet. Das Zentrum kann hier wie oben beschrieben beispielsweise als geometrischer Schwerpunkt des jeweiligen ersten Verbindungsabschnitts definiert werden.

Die zweiten Verbindungsabschnitte sind auf einander gegenüberliegenden Seiten der ersten Gerade, insbesondere in der Leiterebene, angeordnet. Die zumindest zwei zweiten Verbindungsabschnitte können jeweils vollständig auf jeweils einer der beiden Seiten der ersten Gerade angeordnet sein. Insbesondere können die zumindest zwei zweiten Verbindungsabschnitte frei von einer Durchkreuzung durch die erste Gerade sein. Auch möglich ist es, dass zumindest eine oder zumindest zwei der zweiten Verbindungsabschnitte von der ersten Gerade durchkreuzt werden. Die zumindest zwei zweiten Verbindungsabschnitte sind jeweils zumindest teilweise auf gegenüberliegenden Bereichen der ersten Gerade angeordnet. Insbesondere sind zumindest die jeweiligen Zentren der zumindest zwei zweiten Verbindungsabschnitte auf einander gegenüberliegenden Seiten der ersten Gerade angeordnet. Das Zentrum eines zweiten Verbindungsabschnitts kann hier wie oben beschrieben beispielsweise als geometrischer Schwerpunkt des jeweiligen zweiten Verbindungsabschnitts definiert werden.

In einer Ausführungsform erstrecken sich die zumindest zwei Verbindungsflachteile in einer Längsrichtung. Insbesondere kann ein erstes Verbindungsflachteil sich in einer ersten Längsrichtung erstrecken. Insbesondere kann sich ein zweites Verbindungsflachteil in einer zweiten Längsrichtung erstrecken, wobei die erste Längsrichtung insbesondere im Wesentlichen der zweiten Längsrichtung entsprechen kann. Auch können die erste und zweite Längsrichtung voneinander in ihrer jeweiligen Ausrichtung abweichen.

Eine Längsrichtung eines Verbindungsflachteils kann beispielsweise ausgehend von dem ersten Verbindungsabschnitt des Verbindungsflachteils zu dem zweiten Verbindungsabschnitt des Verbindungsflachteils führen. Auch kann eine Längsachse eines Verbindungsflachteils als die Richtung bestimmt sein, in der das Verbindungsflachteil die größte räumliche Ausdehnung besitzt. Für die zumindest zwei Verbindungsflachteile kann eine gemeinsame Längsrichtung definiert sein. Die gemeinsame Längsrichtung der zumindest zwei Verbindungsflachteile kann von den jeweiligen Längsrichtungen der Verbindungsflachteile abweichen. Auch können die Längsrichtungen der Verbindungsflachteile mit der gemeinsamen Längsrichtung der Verbindungsflachteile im Wesentlichen übereinstimmen.

Die zumindest zwei Verbindungsflachteile können sich in einer Ausführungsform von einem gemeinsamen ersten distalen Ende hin zu einem gemeinsamen zweiten distalen Ende erstrecken. Das jeweilige distale Ende kann hierbei insbesondere ein distales Ende des Übergabestützpunktes sein.

Das erste und oder das zweite distalen Ende des Übergabestützpunktes kann ein Punkt auf beispielsweise einem der zumindest zwei der Verbindungsflachteile sein. Auch möglich ist es, das erste und/oder zweite distale Ende als einen räumlich ausgedehnten Bereich zu definieren. Das erste und das zweite distale Ende des Übergabestützpunktes überlappen einander insbesondere nicht.

Beispielsweise kann zumindest ein erster Verbindungsabschnitt oder die zumindest zwei ersten Verbindungsabschnitte des Übergabestützpunktes im Wesentlichen an dem ersten distalen Ende angeordnet sein. Auch können diese nur teilweise an dem ersten distalen Ende angeordnet sein. In dem ersten distalen Ende des Übergabestützpunktes kann der Endpunkt zumindest einer der zumindest zwei Verbindungsflachteile befindlich sein. Der Endpunkt eines Verbindungsflachteils kann beispielsweise der Punkt auf dem Verbindungsflachteil definiert werden, welcher entlang der Längsachse des Verbindungsflachteils und/oder entlang der gemeinsamen Längsrichtung des Übergabestützpunktes das Ende des Verbindungsflachteils markiert.

Beispielsweise kann zumindest ein zweiter Verbindungsabschnitt und/oder die zumindest zwei zweiten Verbindungsabschnitte des Übergabestützpunktes im Wesentlichen an dem zweiten distalen Ende angeordnet sein. Zumindest einer der zumindest zwei zweiten Verbindungsabschnitte und/oder die zumindest zwei zweiten Verbindungsabschnitte können im Wesentlichen vollständig an dem zweiten distalen Ende angeordnet sein. Auch möglich ist es, dass zumindest eines und/oder die zumindest zwei zweiten Verbindungsabschnitte zum Teil außerhalb des zweiten distalen Endes angeordnet sind.

Durch die oben beschriebene Anordnung der ersten und der zweiten Verbindungsabschnitte der zumindest zwei Verbindungsflachteile ermöglicht verschiedene Ausrichtungen der Verbindungsabschnitte. Beispielsweise können die ersten Verbindungsabschnitte in einer ersten Ausrichtung angeordnet sein und die zweiten Verbindungsabschnitte in einer zweiten davon verschiedenen, beispielsweise dazu im Wesentlichen rechtwinkligen Ausrichtung. Eine Ausrichtungsänderung der Verbindungsabschnitte von ersten zu zweiten Verbindungsabschnitte ermöglicht eine kompakte Kontaktierung eines Energiespeichers. Üblicherweise sind die Anschlüsse eines Energiespeichers in einer ersten Ausrichtung beanstandet. Die erste Ausrichtung ist dabei häufig parallel zur Kante des Energiespeichers. Wenn nun zwei zueinander parallel ausgerichtete, nebeneinander verlaufende Stromleitungen an den Anschlüssen des Energiespeichers kontaktiert werden, verlaufen diese notwendigerweise zunächst einmal senkrecht zu der Kante des Energiespeichers. In einem Automobil ist häufig gewünscht, insbesondere aus Gründen der Platzersparnis, dass eine Leitung parallel zur Kante des Energiespeichers abgeht. Die gegenständlich von dem Übergabestützpunkt ermöglichte Richtungsänderung ist hierbei hilfreich. Herausfordernd dabei ist jedoch, dass sich zwei unterschiedliche Pfade an dem Übergabestützpunkt für die zumindest zwei Anschlüsse ergeben. Diese umfassen zum einen einen Pfad für die Verbindung zwischen dem ersten und dem zweiten Verbindungsabschnitt eines ersten Verbindungsflachteils und zum anderen einen Pfad zwischen dem ersten und zweiten Verbindungsabschnitt eines zweiten Verbindungsflachteils. Insbesondere ist ein erster der zumindest zwei ersten Verbindungsabschnitte der zumindest zwei Verbindungsflachteile weiter von den zweiten Verbindungsabschnitten der zumindest zwei Verbindungsflachteile entfernt, als zumindest ein zweiter der zumindest zwei ersten Verbindungsabschnitte. Insbesondere entstehen diese voneinander verschiedenen Pfade, da die zumindest zwei Verbindungsflachteile im Wesentlichen überlappungsfrei zueinander angeordnet sind.

Erstrebenswert ist eine Angleichung der zumindest zwei stromführenden Pfade in ihren elektrischen Eigenschaften. Wenn die zumindest zwei stromführenden Pfade zueinander ähnliche elektrische Eigenschaften aufweisen, entsteht eine zumindest annähernde Symmetrie zwischen den zumindest zwei stromführenden Pfaden. Auf diese Art und Weise kann erreicht werden, dass keiner der zumindest zwei stromführenden Pfade einer erhöhten Erwärmung, insbesondere durch ohmsche Verluste, ausgesetzt ist.

Scheinbar führt aber die gegenständlich vorgeschlagene Anordnung der zumindest zwei überlappungsfrei in einer gemeinsamen Leiterebene angeordneten Verbindungsflachteile mit relativ zueinander verdreht ausgerichteten Verbindungsabschnitten dazu, dass einer der stromführenden Pfade deutlich länger als der andere stromführende Pfad ausfällt. Naheliegender erscheint es, die zumindest zwei Verbindungsflachteile übereinander anzuordnen, sodass diese sich mit ihren jeweiligen Breitseiten überlappen.

Gegenständlich wurde erkannt, dass ein Ineinandergreifen der zumindest zwei Verbindungsflachteile die Unterschiede in den Weglängen der stromführenden Pfade minimieren kann.

Zumindest ein erstes der zumindest zwei Verbindungsflachteile weist in einem Ausführungsbeispiel eine Ausnehmung auf. Die Ausnehmung befindet sich insbesondere in einem dem ersten Verbindungsabschnitt des Verbindungsflachteils nahegelegenen Bereich. Eine Ausnehmung in einem Verbindungsflachteil ist hierbei eine Ausnehmung der Schmalseite. Die Ausnehmung erstreckt sich insbesondere über die gesamte Dicke des Verbindungsflachteils. Somit stellt sich die Ausnehmung in Draufsicht auf die Breitseite des Verbindungsflachteils, insbesondere in Draufsicht in Richtung der Flächennormalen auf die Breitseite des Verbindungsflachteils, als eine in die Breitseite hinein geschnittene Verschmälerung der Breitseite dar.

Zur Vereinfachung der nachfolgenden Beschreibung wird zunächst ein kurzes und ein langes Verbindungsflachteil definiert. Der erste Verbindungsabschnitt des kurzen Verbindungsflachteils befindet sich näher an den zweiten Verbindungsabschnitten der zumindest zwei Verbindungsflachteile als der erste Verbindungsabschnitt des langen Verbindungsflachteils.

Insbesondere das lange Verbindungsflachteil weist eine Ausnehmung auf.

Die Ausnehmung des langen Verbindungsflachteils kann in einer Schmalkante des langen Verbindungsflachteils angeordnet sein, welche zu dem kurzen Verbindungsflachteil weist. Eine derart zu einem anderen Verbindungsflachteil weisende Schmalseite kann als innere Schmalseite benannt sein.

Ein Bereich des kurzen Verbindungsflachteils greift in die Ausnehmung des langen Verbindungsflachteils ein. Hiermit kann beispielsweise gemeint sein, dass das kurze Verbindungsflachteil zumindest teilweise in die konvexe Einhüllende der Breitseite des langen Verbindungsflachteils hineinragt, insbesondere im Bereich der Ausnehmung. Hoho

Insbesondere kann der erste Verbindungsabschnitt des kurzen Verbindungsflachteils zumindest teilweise in die Ausnehmung des langen Verbindungsflachteils eingreifen.

Die Breite des langen Verbindungsflachteils kann im Bereich der Ausnehmung des langen Verbindungsflachteils verringert sein. Die Breite kann hierbei beispielsweise im Wesentlichen senkrecht zur Längsrichtung des Verbindungsflachteils und/oder der Längsrichtung des Übergabestützpunktes gemessen werden. Insbesondere ist es möglich, dass die Breite des langen Verbindungsflachteils im Bereich der Ausnehmung im Vergleich zu sonstigen davon verschiedenen Bereichen des langen Verbindungsflachteils nicht verringert ist. Dies kann beispielsweise dadurch erreicht werden, dass die Schmalkante des langen Verbindungsflachteils auf der der Ausnehmung gegenüberliegenden Seite des langen Verbindungsflachteils von der Ausnehmung weggeführt ist. In einer beispielhaften Ausgestaltungen können die beiden Schmalseiten des langen Verbindungsflachteils, welche im Wesentlichen entlang der Längsrichtung des Verbindungsflachteils verlaufen und einander gegenüber liegen, im Wesentlichen parallel zueinander geführt sein, wobei bereichsweise Abweichungen von einem parallelen Verlauf erlaubt sind. Hierdurch kann erreicht werden, dass die Breite des langen Verbindungsflachteils entlang der Längsrichtung im Wesentlichen gleichbleibend ist.

Das lange Verbindungsflachteil kann beispielsweise entlang der Längsrichtung des Übergabestützpunktes ausgehend von dem zweiten Verbindungsabschnitt zunächst in einer im Wesentlichen geraden Linie verlaufen. Im Bereich des ersten Verbindungsabschnittes des kurzen Verbindungsflachteils kann sich der Verlauf des langen Verbindungsflachteils von einem im wesentlichen geraden Verlauf zu einem zumindest teilweise gebogenen Verlauf ändern, wobei der gebogene Bereich um den ersten Verbindungsabschnitt des kurzen Verbindungsflachteils zumindest teilweise herum führt.

Das kurze Verbindungsflachteil kann beispielsweise eine Form ähnlich der eines Ls aufweisen. Das kurze Verbindungsflachteil kann beispielsweise einen im Wesentlichen geraden Leitabschnitt zwischen dem ersten und dem zweiten Verbindungsabschnitt des kurzen Verbindungsflachteils aufweisen. Der Leitabschnitt des kurzen Verbindungsflachteils kann sich im Wesentlichen gerade ausgehend vom dem zweiten Verbindungsabschnitt in Richtung des ersten Verbindungsabschnittes des ersten Verbindungsflachteils erstrecken. An dem dem zweiten Verbindungsabschnitt abgewandten Ende des Leitabschnitts kann der erste Verbindungsbereich des kurzen Verbindungsflachteils angeordnet sein. Der erste Verbindungsteil des kurzen Verbindungsflachteils kann sich insbesondere in Richtung des langen Verbindungsflachteils erstrecken. In dem gegenständlichen Übergabestützpunkt kann folglich der erste Verbindungsabschnitt des kurzen Verbindungsflachteils in Richtung des langen Verbindungsflachteils versetzt sein, beispielsweise im Wesentlichen parallel zur zweiten Gerade und oder im Wesentlichen senkrecht zur ersten Gerade. Auf diese Art und Weise kann beispielsweise erreicht werden, dass der erste Verbindungsabschnitt des kurzen Verbindungsflachteils, insbesondere dessen Mittelpunkt, in Projektion parallel zur Leiterebene und senkrecht zur zweiten Gerade zumindest teilweise und/oder vorzugsweise vollständig zwischen den zweiten Verbindungsabschnitten des kurzen und des langen Verbindungsflachteils angeordnet ist. Damit die Position des ersten Verbindungsabschnittes des kurzen Verbindungsflachteils gewählt werden kann, wie beschrieben (in Richtung des langen Verbindungsflachteils versetzt), erlaubt die Ausnehmung in dem langen Verbindungsflachteil dem ersten Verbindungsabschnitt des kurzen Verbindungsflachteils, dort in das lange Verbindungsflachteil einzugreifen.

Der erste Verbindungsabschnitt des langen Verbindungsflachteils, insbesondere dessen Mittelpunkt, kann ebenfalls, wie der erste Abschnitt des kurzen Verbindungsflachteils, in Projektion parallel zur Leiterebene senkrecht zur zweiten Gerade zumindest teilweise zwischen den zweiten Verbindungsabschnitten des kurzen und des langen Verbindungsflachteils liegen. Hierfür ist der erste Verbindungsabschnitt des langen Verbindungsflachteils in dem den zweiten Verbindungsabschnitten der langen und kurzen Verbindungsflachteile abgewandten Seite des langen Verbindungsflachteils in Richtung des kurzen Verbindungsflachteils geführt.

Im Bereich des Leitabschnitts des kurzen Verbindungsflachteils kann das lange Verbindungsflachteil einen dazu im Wesentlichen parallel verlaufenden Leitabschnitt umfassen.

Zwei der zumindest zwei Verbindungsflachteile weisen innere Schmalseiten auf, welche den jeweils anderen Verbindungsflachteilen zugewandt sind. Zwischen den inneren Schmalseiten der zumindest zwei Verbindungsflachteile ist ein Spalt angeordnet. Der Spalt kann entlang der inneren Schmalseiten eine Mindestbreite aufweisen. Beispielsweise können zwischen den zumindest zwei Verbindungsflachteilen mindestens 1 mm bis 1 cm oder eine höhere Mindestbreite vorgesehen sein.

Zwei der zumindest zwei Verbindungsflachteile können ebenfalls entlang der inneren Schmalseiten einen im Wesentlichen konstanten Abstand zueinander haben. Bereichsweise Abweichungen von einem konstanten Abstand sind hierbei erlaubt.

In einer Ausführungsform ist die erste Gerade im Wesentlichen senkrecht zur zweiten Gerade ausgerichtet. Beispielsweise können die erste Gerade und die zweite Gerade einen Winkel von 90° +/- 1° bis +/-10° einschließen.

In einem Ausführungsbeispiel kreuzen sich die erste Gerade und die zweite Gerade in der Leiterebene. Ein Kreuzen zweier Geraden kann hierbei insbesondere bedeuten, dass diese sich in einem gemeinsamen Schnittpunkt treffen. Auch kann ein Kreuzen zweier Geraden bedeuten, dass zwei Geraden sich in einem jeweiligen. Auf der jeweiligen Gerade maximal annähern. Beispielsweise kann die kürzeste Strecke zwischen den beiden Geraden bestimmt werden und der Mittelpunkt dieser Strecke als Schnittpunkt der Geraden definiert werden, insbesondere ohne, dass die beiden Geraden sich treffen.

Insbesondere können sich die beiden Geraden in einem Schnittpunkt treffen, welcher zwischen den zweiten Verbindungsabschnitten der zumindest zwei Verbindungsflachteile angeordnet ist.

In einem Ausführungsbeispiel können die zweiten Verbindungsabschnitte der zumindest zwei Verbindungsflachteile gleich weit von der ersten Geraden entfernt sein. Dies kann bedeuten, dass die jeweiligen Entfernungen zwischen den zweiten Verbindungsabschnitten und der ersten Geraden im Wesentlichen gleich groß sind. Die Entfernung zwischen einem zweiten Verbindungsabschnitt und der ersten Geraden kann beispielsweise ausgehend von dem Punkt des zweiten Verbindungsabschnittes, welcher der ersten Geraden am nächsten ist, gemessen werden. Auch kann die Entfernungen zwischen einem zweiten Verbindungsabschnitt und der ersten Geraden beispielsweise ausgehend von dem Mittelpunkt des zweiten Verbindungsabschnitts zu der ersten Geraden gemessen werden. Der Mittelpunkt bestimmt sich hier beispielsweise als der geometrische Schwerpunkt des zweiten Verbindungsabschnittes.

In einer Ausführungsform ist der Abstand zwischen den zweiten Verbindungsabschnitten auf zweier der zumindest zwei Verbindungsflachteile im Wesentlichen gleich groß wie der Abstand zwischen den ersten Verbindungsabschnitten der Verbindungsflachteile.

Zumindest eines der Verbindungsflachteile kann aus einem Metallwerkstoff geformt sein. Insbesondere kann ein Verbindungsflachteil aus Aluminium, Kupfer, E-Kupfer und/oder Kombinationen hieraus geformt sein. Legierungen aus den genannten Materialien und/oder weiteren Metallwerkstoffen sind ebenfalls möglich.

Beispielsweise können die zumindest zwei Verbindungsflachteile aus E-Kupfer geformt sein.

In einer Ausführungsform ist zumindest eines der Verbindungsflachteile beschichtet. Insbesondere kann zumindest eines der Verbindungsflachteile mit einem Metallwerkstoff beschichtet sein. Beispielsweise kann das Verbindungsflachteil mit Silber, Gold, Nickel, Kombinationen hiervon und/oder mit mehreren Schichten insbesondere aus den genannten Materialien, insbesondere mit unternickeltem Silber beschichtet sein.

Zumindest eines oder die zumindest zwei Verbindungsflachteile können geschmiedet sein. Auch kann zumindest eines der Verbindungsflachteile gestanzt sein, ausgeschnitten sein, gegossen sein und/oder gespritzt sein. Ein geschmiedetes Verbindungsflachteil hat insbesondere den Vorteil, dass dessen Form frei gestaltet werden kann und dass das Material eine hohe Festigkeit aufweist. Darüber hinaus können besonders dicke und damit gut leitende - sowohl thermisch als auch elektrisch - hergestellt werden, als auch Verbindungsflachteile mit einer hohen Wärmekapazität.

An zumindest einem der zumindest zwei Verbindungsteile kann in einem Ausführungsbeispiel ein Anschlussbolzen angeordnet sein. Der Anschlussbolzen erstreckt sich insbesondere in einer Erstreckungsrichtung über zumindest eine Breitseite des Verbindungsflachteils hinaus. Die Erstreckungsrichtung des Anschlussbolzens kann insbesondere im Wesentlichen senkrecht zur Breitseite des Verbindungsflachteils verlaufen.

Der Anschlussbolzen kann insbesondere ein Loch aufweisen. Das Loch des Anschlussbolzens kann beispielsweise als Sackloch oder als Durchgangsloch ausgeführt sein. Beispielsweise kann in dem Loch ein Gewinde angeordnet sein. Insbesondere kann ein Sackloch in dem Anschlussbolzen ein Gewinde aufweisen. Das Loch in dem Anschlussbolzen kann beispielsweise senkrecht zu Erstreckungsrichtung des Anschlussbolzens zumindest teilweise durch den Anschlussbolzen hindurch verlaufen. Auch ist es möglich, dass das Loch im Wesentlichen parallel zur Erstreckungsrichtung des Anschlussbolzens verläuft.

Ein Anschlussbolzen kann insbesondere in einem Verbindungsabschnitt zumindest eines der und/oder der zumindest zwei Verbindungsflachteile angeordnet sein. Der Anschlussbolzen ist vorzugsweise in dem ersten Verbindungsabschnitt des Verbindungsflachteils angeordnet.

In einem Ausführungsbeispiel wird der gegenständliche Übergabestützpunkt mit den zweiten Verbindungsabschnitt hin mit einem Energiespeicher verbunden. Demzufolge dienen die ersten Verbindungsabschnitte und insbesondere die darin angeordneten Anschlussbolzen der Kontaktierung weiterer Leitungen, welche beispielsweise mit dem Fahrzeugnetz verbunden sind. Beispielsweise können Leitungen mittels Schrauben in die Gewinde der Anschlussbolzen eingeschraubt werden. Auch können an Anschlussbolzen Leitungen verschweißt werden und/oder angeklemmt werden und/oder aufgesteckt, genietet oder anderweitig verbunden werden.

In einem Ausführungsbeispiel ist in zumindest einem der zumindest zwei Verbindungsflachteile eine Öffnung angeordnet. Die Öffnung erstreckt sich insbesondere über die gesamte Dicke des Verbindungsflachteils. Beispielsweise kann die Öffnung als ein Durchgangsloch gebildet sein. Auch möglich ist es, dass in dem Verbindungsflachteil ein Sackloch angeordnet ist. Die Öffnung des Verbindungsflachteils kann beispielsweise ein Gewinde aufweisen.

In einem Ausführungsbeispiel ist eine Öffnung in zumindest einem der und/oder in den zumindest zwei Verbindungsflachteile in dem zweiten Verbindungsabschnitt angeordnet.

Es ist ebenfalls möglich, dass sowohl in den zweiten als auch in den ersten Bereichen der zumindest zwei Verbindungsflachteile jeweils Öffnungen angeordnet sind. In einer alternativen Ausgestaltung können ebenfalls in den zweiten und ersten Verbindungsabschnitten der zumindest zwei Verbindungsflachteile jeweils Anschlussbolzen angeordnet sein. In einer bevorzugten Ausführungsform sind in den ersten Verbindungsabschnitten der zumindest zwei Verbindungsflachteile jeweils zumindest eine Öffnung angeordnet und in den ersten Verbindungsabschnitten jeweils zumindest ein Anschlussbolzen.

In einem Ausführungsbeispiel sind die zumindest zwei Verbindungsflachteile zumindest teilweise von einem gemeinsamen Gehäuse umgeben.

Das Gehäuse ist vorzugsweise aus einem nicht leitenden Material geformt, beispielsweise aus einem Kunststoff, insbesondere aus einem Hochtemperaturkunststoff, beispielsweise PA6GF15, UL94 oder einem anderen Hochtemperaturkunststoff, und/oder aus einem anderen nicht leitenden Material wie beispielsweise Keramik, Glas, Silikon, isolierend beschichtetem Metall und/oder anderen Materialien.

In einer vorteilhaften Ausgestaltung sind die zumindest zwei Verbindungsflachteile zumindest teilweise von einem gemeinsamen Gehäuse umspritzt. Hierdurch kann eine besonders gute Verbindung zwischen dem Gehäuse und der Oberfläche der Verbindungsflachteile erreicht werden. Insbesondere kann auf diese Weise vermieden werden, dass sich Flüssigkeit oder andere ungewollte Stoffe entlang der Verbindungsflachteile ausgehend von den ersten Verbindungsabschnitten zu den zweiten Verbindungsabschnitten und/oder umgekehrt verteilen können.

Das Gehäuse liegt vorzugsweise zumindest bereichsweise unmittelbar an den Verbindungsflachteile in an. Insbesondere umschließt das Gehäuse die zumindest zwei Verbindungsflachteile im Bereich der Leitabschnitte. Insbesondere ist das Gehäuse zumindest teilweise zwischen den zumindest zwei Verbindungsflachteile angeordnet. Insbesondere kann das Gehäuse zumindest teilweise zwischen den inneren Schmalseiten der zumindest zwei Verbindungsflachteile angeordnet sein.

Das Gehäuse erfüllt unter anderem die Funktion einer Isolation der Verbindungsflachteile voneinander. Eine weitere Funktion des Gehäuses ist die, dass die ersten Verbindungsabschnitte und die zweiten Verbindungsabschnitte der zumindest zwei Verbindungsflachteile voreinander geschützt sind. Insbesondere lässt sich mittels des Gehäuses vermeiden, dass Feuchtigkeit, welche sich im Bereich der ersten Verbindungsabschnitte befindet, zu den zweiten Verbindungsabschnitten bewegt und umgekehrt. Insbesondere ein die zumindest zwei Verbindungsflachteile eng umschließendes Gehäuse kann Längswasser entlang der Verbindungsflachteile verhindern.

Das Gehäuse kann insbesondere die ersten Verbindungsabschnitte und/oder die zweiten Verbindungsabschnitte freilegen. Hiermit kann gemeint sein, dass im Bereich der ersten Verbindungsabschnitte und/oder im Bereich der zweiten Verbindungsabschnitte der zumindest zwei Verbindungsflachteile keine Gehäuseschicht angeordnet ist. Auf diese Art und Weise kann sichergestellt werden dass die gegenständliche Übergabestützpunktes zu beiden Seiten, nämlich im Bereich der ersten Verbindungsabschnitte und im Bereich der zweiten Verbindungsabschnitte elektrisch kontaktiert werden kann. Das Gehäuse kann insbesondere alle Bereiche der zumindest zwei Verbindungsflachteile außer den ersten und zweiten Verbindungsabschnitten vollständig umgeben.

Im Bereich der ersten und/oder der zweiten Verbindungsabschnitte zumindest eines der zumindest zwei und/oder der zumindest zwei Verbindungsflachteile kann ein Kragen angeordnet sein. Der Kragen kann zumindest einen Verbindungsabschnitt und oder mehrere Verbindungsabschnitte umgeben, insbesondere umlaufend umgeben. Ein Kragen um einen ersten Verbindungsabschnitt zumindest eines der zumindest zwei Verbindungsflachteile kann sich beispielsweise im Wesentlichen senkrecht zur Breitseite des Verbindungsflachteils erstrecken. Ein Kragen um einen zweiten Verbindungsabschnitt kann sich beispielsweise ebenfalls zumindest teilweise und/oder vollständig umlaufend um zumindest einen der und/oder mehrere zweite Verbindungsabschnitte der zumindest zwei Verbindungsflachteile im Wesentlichen senkrecht zur Breitseite zumindest eines der Verbindungsflachteile erstrecken.

Im Bereich der ersten Verbindungsabschnitte kann das Gehäuse einen Kragen aufweisen. Der Kragen kann sich insbesondere in Richtung der Erstreckungsrichtung zumindest eines der der Anschlussbolzen erstrecken. Der Kragen kann die Anschlussbolzen im Wesentlichen umlaufend umfassen. Der Kragen kann die Anschlussbolzen der zumindest zwei Verbindungsflachteile in Erstreckungsrichtungen der Anschlussbolzen überragen. Die Anschlussbolzen sind folglich in dem von dem Kragen umfassten Bereich versenkt. Auf diese Weise ist eine sichere Kontaktierung der Anschlussbolzen vereinfacht. Insbesondere wird einer versehentlichen Kontaktierung vorgebeugt. Zum anderen kann der Bereich, in welchem sich die Anschlussbolzen befinden, besser gegen Umwelteinflüsse geschützt werden.

An dem Gehäuse kann in einem Ausführungsbeispiel zumindest eine Dichtung angeordnet sein.

Eine Dichtung kann beispielsweise aus einem flexiblen Material insbesondere aus einem Kunststoff, Silikon, Gummi, Kork oder ähnlichen Materialien geformt sein. In einem Ausführungsbeispiel kann die Dichtung gemeinsam mit dem Gehäuse in einem Zwei-Komponenten-Spritzgussverfahren hergestellt werden. Hierbei werden zwei verschiedene Kunststoffe verschiedener Weichegerade in einem gemeinsamen Prozess zu einem Gehäuse verspritzt. Hierdurch ergibt sich eine feste Bindung zwischen der Dichtung und dem Gehäuse.

Zumindest eine der zumindest einen Dichtung kann insbesondere eine geschlossene Form aufweisen. Beispielsweise kann die Dichtung in Form eines Rechtecks, beispielsweise mit abgerundeten Ecken, in Form eines Kreises, einer Ellipse, eines Vieleck, oder verschiedener anderer geschlossener Formen verlaufen.

Zumindest einer der zumindest einen Dichtungen kann mehrere Rippen umfassen. Eine mehrrippige Dichtung kann die Dichtleistung steigern.

Insbesondere kann zumindest eine der zumindest einen Dichtung um die ersten Verbindungsabschnitte der zumindest zwei Verbindungsflachteile angeordnet sein, insbesondere um die Anschlussbolzen. Alternativ oder zusätzlich kann eine Dichtung um die zweiten Verbindungsabschnitte der zumindest zwei Verbindungsflachteile angeordnet sein. Dadurch, dass zumindest eine der zumindest einen Dichtung um die zumindest zwei zweiten und/oder die zumindest zwei ersten Verbindungsabschnitte angeordnet ist, kann der gegenständliche Übergabestützpunkt mit den ersten und/oder zweiten Verbindungsabschnitten mit einem weiteren Element dicht verbunden werden. Insbesondere kann eine gas-, flüssigkeits-, und/oder druckdichte Abdichtung eines solchen Übergangs zu einem weiteren Bauteil ermöglicht werden.

In einem Ausführungsbeispiel umfasst der Übergabestützpunkt einen Gehäuseverschluss. Der Gehäuseverschluss kann beispielsweise als ein Deckel gebildet sein. Der Gehäuseverschluss kann beispielsweise an die Form des Gehäuses angepasst sein. Der Gehäuseverschluss kann auf das Gehäuse aufgelegt werden.

Der Gehäuseverschluss kann beispielsweise mit den Gehäuse in einem Kontaktbereich kontaktieren. Beispielsweise kann der Kontaktbereich zwischen Gehäuseverschluss und Gehäuse umlaufend um die ersten Verbindungsabschnitte angeordnet sein. In einer Ausführungsform befindet sich zwischen dem Gehäuseverschluss und dem Gehäuse zumindest eine Dichtung. Dies kann beispielsweise eine der zumindest einen. Dichtungen des Gehäuses sein.

Auch möglich ist es, dass an dem Gehäuseverschluss eine Dichtung angeordnet ist. Auch die Dichtung an dem Gehäuseverschluss kann, wenn der Gehäuseverschluss an dem Gehäuse anliegt, umlaufend um die ersten Verbindungsabschnitte angeordnet sein. Die Dichtung des Gehäuseverschlusses kann als separates Bauteil an dem Gehäuseverschluss anliegen. Beispielsweise kann an dem Gehäuseverschluss eine Nut vorgesehen sein, in die eine Dichtung eingesetzt werden kann. Die Dichtung des Gehäuseverschlusses kann beispielsweise aus einem der oben aufgeführten Materialien der Dichtung des Gehäuses geformt sein. Die Dichtung des Gehäuseverschlusses es kann ebenfalls wie die Dichtung des Gehäuses in einem Zwei-Komponenten-Spritzgussverfahren gemeinsam mit dem Gehäuseverschluss hergestellt sein.

Der Gehäuseverschluss kann an dem Gehäuse verliersicher gehalten werden. Beispielsweise können Scharniere, Bänder, Schienen oder ähnliche Haltemittel vorgesehen sein, in welche den Gehäuseverschluss an dem Gehäuse verliersicher halten.

An dem Gehäuse kann zumindest ein Befestigungsmittel angeordnet sein. Das Befestigungsmittel kann insbesondere kraftschlüssig und/oder formschlüssig sein. Beispielsweise kann das Befestigungsmittel eine Schraubenaufnahmen und/oder ein Gewinde für eine Schraube umfassen. Auch kann ein Befestigungsmittel ein Loch in dem Gehäuse sein. Befestigungsmittel können auch beispielsweise Haken, Schnappverschlüsse, Schienen, Klammern, Aufnahmen für eines dieser Befestigungsmittel und/oder andere Befestigungsmittel sein.

Insbesondere kann in dem Gehäuse zumindest ein Gewinde eingelassen sein. Das Gewinde kann beispielsweise aus einem Metallwerkstoff geformt sein, beispielsweise als Schraubenaufnahmen. Das Gewinde kann beispielsweise in die Gehäusewand eingelassen sein, beispielsweise umspritzt. Insbesondere können mehrere Gewinde als Befestigungsmittel an dem Gehäuse angeordnet sein beispielsweise zwei, drei, vier oder mehr Gewinde.

Die Befestigungsmittel, insbesondere Gewinde, können in dem von zumindest einer der zumindest einen Dichtungen des Gehäuses umfassten Bereich angeordnet sein.

Alternativ oder zusätzlich kann an dem Gehäuseverschluss zumindest ein Befestigungsmittel vorgesehen sein. Insbesondere kann an dem Gehäuseverschluss ein Loch vorgesehen sein, insbesondere eine Durchführung, insbesondere eine Durchführung für eine Schraube, insbesondere aus einem Metallwerkstoff. Eine Durchführung kann insbesondere in die Gehäusewand eingelassen sein, beispielsweise in dieser verspritzt und/oder vergossen sein.

Mittels zumindest eines der Befestigungsmittel (des Gehäuses und/oder des Gehäuseverschlusses) kann der Gehäuseverschluss an dem Gehäuse gehalten werden. Insbesondere kann der Gehäuseverschluss den von einer der zumindest einen Dichtungen umfassten Bereich des Gehäuses abdecken. Insbesondere kann das zumindest eine Befestigungsmittel einen Anpressdruck zwischen Gehäuseverschluss und Gehäuse bewirken. Insbesondere kann zwischen dem Gehäuse und dem Gehäuseverschluss eine Dichtung in Presspassung angeordnet sein. Das zumindest eine Befestigungsmittel kann die Presspassung bewirken. Insbesondere kann zumindest eine Schraube durch ein Loch in dem Gehäusedeckel hindurchgeführt werden, in einer Schraubenaufnahme, insbesondere einem Gewinde auf Seiten des Gehäuses eingeschraubt werden und somit einen Anpressdruck bewirken.

In einem Ausführungsbeispiel ist zumindest an einer der als Befestigungsmittel fungierenden Schrauben ein Dichtring angeordnet. Der Dichtring kann beispielsweise um den Schraubenschaft greifen, insbesondere umlaufend. Der Dichtring kann beispielsweise im Bereich des Schraubenkopfes angeordnet sein. Der Dichtring kann einer Abdichtung zwischen Schraube und Durchführung der Schraube durch den Gehäuseverschluss dienen, insbesondere einer gasdichten, flüssigkeitsdichten und/oder druckdichten Abdichtung.

In einem Ausführungsbeispiel kann der Übergabestützpunkt zumindest einen Temperatursensor umfassen. Der Temperatursensor kann beispielsweise in der Nähe zumindest eines der Verbindungsflachteile angeordnet sein. Beispielsweise kann der zumindest eine Temperatursensor in der Nähe zumindest eines der zumindest zwei ersten Verbindungsabschnitte angeordnet sein. Der Temperatursensor kann beispielsweise zu den zumindest zwei Verbindungsflachteil im Wesentlichen den jeweils gleichen Abstand aufweisen. Beispielsweise kann der zumindest eine Temperatursensor in einem von zumindest einer der zumindest einen Dichtungen umfassten Bereich angeordnet sein. Insbesondere kann der zumindest eine Temperatursensor in einem von dem Gehäuseverschluss abdeckbaren Bereich angeordnet sein. Beispielsweise kann der Temperatursensor zumindest teilweise in dem Gehäuse eingegossen sein. Beispielsweise weist das Gehäuse eine Öffnung auf, welche den rezeptiven Bereich des Temperatursensors freilegt.

Insbesondere weist der Temperatursensor zumindest ein Anschlusskabel auf. Das Anschlusskabel des Temperatursensors kann aus dem Gehäuse herausgeführt sein. Insbesondere kann das zumindest eine Anschlusskabel des Temperatursensors in dem Gehäuse verspritzt sein. Das Anschlusskabel des Temperatursensors kann auf einer der Öffnung des Gehäuses, welches die ersten Verbindungsabschnitte freilegt, abgewandten Seite des Gehäuses aus diesem herausgeführt sein. Insbesondere kann das die Anschlusskabel des Temperatursensors durch die Gehäusewand geführt sein, insbesondere in der Gehäusewand verspritzt sein.

Da es sich gegenständlich um ein Bauteil der Leistungselektronik handelt, ist die Überwachung der Temperatur von höchster Relevanz für die Sicherheit des Fahrzeuges. Dadurch, dass der Temperatursensor in direkter Nähe zumindest eines der Verbindungsflachteile, vorzugsweise zu den zumindest zwei Verbindungsflachteilen angeordnet ist, kann die Temperatur des Verbindungsflachteils besonders schnell und präzise erfasst werden.

In einem Ausführungsbeispiel umfasst der Übergabestützpunkt zumindest eine Sicherung. Die Sicherung kann insbesondere in dem Gehäuse angeordnet sein. Insbesondere kann die Sicherung in einem von zumindest einer der zumindest einen Dichtungen umfassten Bereich des Gehäuses angeordnet sein. Beispielsweise kann die zumindest eine Sicherung in der Nähe zumindest eines der Verbindungsflachteile angeordnet sein. Insbesondere kann die Sicherung in der Nähe zumindest eines ersten Verbindungsabschnittes des Übergabestützpunktes angeordnet sein.

Der Übergabestützpunkt kann insbesondere eine Sicherung aufweisen, welche zumindest einen der Verbindungsflachteile stromlos stellt, solange der Gehäuseverschluss nicht auf dem Gehäuse aufliegt. Insbesondere kann dies eine HVIL-Sicherung sein.

Die zumindest eine Sicherung kann zumindest ein Anschlusskabel umfassen. Das zumindest eine Anschlusskabel der zumindest einen Sicherung kann aus dem Gehäuse herausgeführt sein. Insbesondere kann das zumindest eine Anschlusskabel der Sicherung durch eine Gehäusewand geführt sein. Beispielsweise kann das zumindest eine Anschlusskabel der Sicherung in einer Gehäusewand des Gehäuses eingegossen und/oder umspritzt sein. Das zumindest eine Anschlusskabel der zumindest einen Sicherungen kann auf einer Seite des Gehäuses aus dem Gehäuse geführt sein, die der Öffnung für die ersten Verbindungsabschnitte des Übergabestützpunktes abgewandt ist.

In einem Ausführungsbeispiel ist eine Wand zwischen dem Gehäuse und dem Gehäuseverschluss angeordnet. Die Wand kann aus einem leitenden Material geformt sein, beispielsweise aus einem Metallwerkstoff und/oder anderen leitenden Materialien. Auch möglich ist es, die Wand aus einem elektrisch nicht leitenden Material zu formen, beispielsweise Kunststoff, Glas, Keramik und/oder anderweitigen nicht leitenden Materialien.

Die Wand kann beispielsweise eine Öffnung aufweisen. In der Öffnung können beispielsweise die ersten Verbindungsabschnitte des Übergabestützpunktes angeordnet sein. Beispielsweise kann die Öffnung eine runde, ovale, rechteckige, abgerundete rechteckige, dreieckige, vieleckige und/oder anderweitig geformte Form aufweisen. Die Öffnungen kann eine Fläche aufweisen, welche zumindest der Fläche entspricht, welche von einem ersten und/oder den zumindest zwei ersten Verbindungsabschnitten eingenommen wird. Insbesondere können die zumindest zwei Anschlussbolzen in der Öffnung der Wand Platz finden. Beispielsweise kann zusätzlich zumindest eine Sicherung durch die Öffnung geführt werden. Insbesondere ist die Öffnung der Wand kleiner als der von der Dichtung des Gehäuses und/oder der Dichtung des Gehäuseverschlusses umschlossene Bereich. Insbesondere kann die jeweilige Dichtung die Öffnung der Wand vollständig umschließen.

Beispielsweise kann die Wand Ausnehmungen aufweisen. Durch die Ausnehmungen können beispielsweise Befestigungsmittel geführt werden. Insbesondere können durch die Ausnehmungen Schrauben geführt werden. Die Ausnehmungen können insbesondere in einem Bereich angeordnet sein, welcher sich vollständig von der Dichtung des Gehäuses und oder der Dichtung des Gehäuseverschlusses umschließen lässt, insbesondere gemeinsam mit der Öffnung der Wand.

Insbesondere kann das zumindest eine Befestigungsmittel des Gehäuseverschlusses und/oder des Gehäuses den Gehäuseverschluss mittelbar über die Wand mit dem Gehäuse verbinden. Beispielsweise kann zumindest eine Schraube durch eine Durchführung des Gehäusedeckels, durch eine Ausnehmung der Wand in eine Schraubenaufnahme des Gehäuses geführt werden.

In einer bevorzugten Konfiguration ist zumindest der Gehäuseverschluss in einem zumindest teilweise umlaufenden Bereich in direktem Kontakt mit der Wand.

Beispielsweise kann der Gehäuseverschluss auch mittelbar an der Wand Anliegen, insbesondere über eine Dichtung, insbesondere über eine Dichtung des Gehäusedeckels.

Auf Seiten des Gehäuses kann die Wand in einem zumindest teilweise umlaufend um die zumindest zwei ersten Verbindungsabschnitte verlaufenden Bereich in Verbindung stehen. Beispielsweise kann die Wand an zumindest einer der zumindest einen Dichtungen des Gehäuses anliegen, insbesondere umlaufend.

Zwischen dem Gehäuseverschluss und der Wand kann eine Presspassung vorliegen. Insbesondere kann eine Dichtung, insbesondere eine Dichtung des Gehäusedeckels, zwischen der Wand und dem Gehäuseverschluss in Presspassung angeordnet sein.

Alternativ oder zusätzlich kann zwischen dem Gehäuse und der Wand eine Presspassung vorliegen, insbesondere kann zumindest eine der zumindest einen Dichtungen des Gehäuses zwischen der Wand und dem Gehäuse in einer Presspassung angeordnet sein.

Insbesondere kann zumindest eines der Befestigungsmittel den Gehäuseverschluss nicht nur an dem Gehäuse, sondern insbesondere an der Wand und an dem Gehäuse halten. Beispielsweise kann zumindest eines der Befestigungsmittel ausgehend von dem Gehäusedeckel durch die Wand, insbesondere durch eine Ausnehmung der Wand, bis in eine Schraubenaufnahme auf Seiten des Gehäuses, insbesondere in ein Gewinde, eingeführt werden. Mittels des zumindest einen Befestigungsmittels kann eine Presspassung zwischen zumindest dem Gehäuseverschluss und der Wand hergestellt werden, insbesondere mittels einer Dichtung. Auch kann mittels des zumindest einen Befestigungsmittels eine Presspassung zwischen dem Gehäuse und der Wand, insbesondere mittels einer Dichtung, erreicht werden.

Der Übergang zwischen dem Gehäuseverschluss und der Wand und/oder der Übergang zwischen dem Gehäuse und der Wand kann zumindest im Wesentlichen gasdicht, flüssigkeitsdicht und/oder druckdicht sein.

Beispielsweise kann die Wand zumindest einen Teil eines einen Energiespeichers umgebenden Sicherheitsbereich bilden. In einer anderen Ausführungsform kann die Wand das Fahrzeuginnere begrenzen.

Im Folgenden wird der Gegenstand der Erfindung anhand einer Ausführungsbeispiele zeigenden Zeichnung näher erläutert. In der Zeichnung zeigen
- Fig. 1: ein gegenständlicher Übergabestützpunkt gemäß einem Ausführungsbeispiel;
- Fig. 2a-c: gegenständliche Übergabestützpunkte gemäß Ausführungsbeispielen;
- Fig. 3a, b: ein gegenständlicher Übergabestützpunkt gemäß einem Ausführungsbeispiel umfassend ein Gehäuse;
- Fig. 4: ein gegenständlicher Gehäuseverschluss gemäß einem Ausführungsbeispiel;
- Fig. 5: ein gegenständlicher Übergabestützpunkt gemäß einem Ausführungsbeispiel umfassend eine Wand;
- Fig. 6: ein gegenständlicher Übergabestützpunkt gemäß einem Ausführungsbeispiel an einem Energiespeicher.

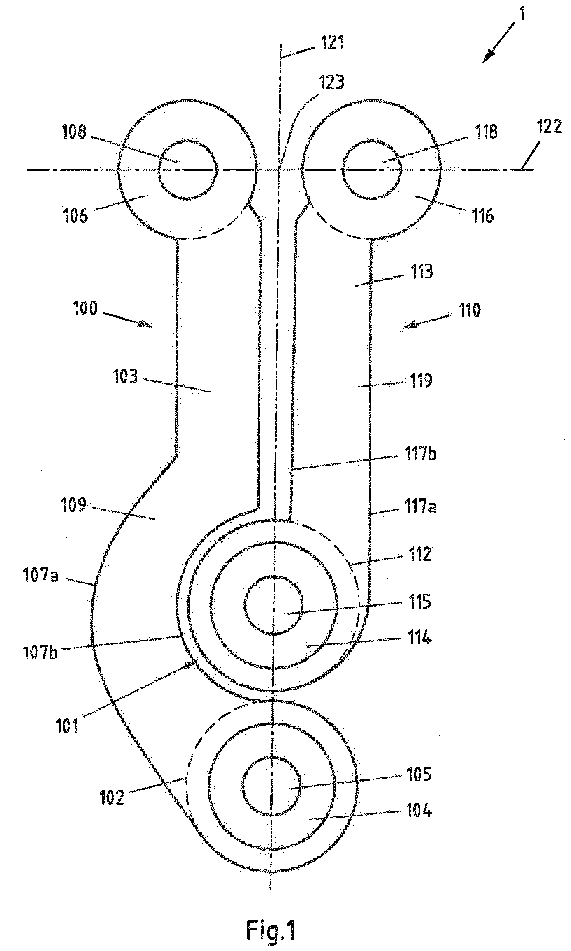

In Figur 1 zeigt einen gegenständlichen Übergabestützpunkt 1. Dieser umfasst ein erstes Verbindungsflachteil 100 und ein zweites Verbindungsflachteil 110. Das erste Verbindungsflachteil 100 und das zweite Verbindungsflachteil 110 umfassen jeweils einen ersten Verbindungsabschnitt 102,112. Das erste Verbindungsflachteil 100 und das zweite Verbindungsflachteil 110 umfassen zudem jeweils einen zweiten Verbindungsabschnitt 106,116.

In dem ersten Verbindungsabschnitt 102,112 zumindest eines der Verbindungsflachteile 100,110 kann ein Anschlussbolzen 104,114 angeordnet sein. Der Anschlussbolzen 104,114 kann ein Loch 105,115 aufweisen. Das Loch 105,115 kann insbesondere ein Sackloch sein. In zumindest einem der Löcher 105,115 kann ein Gewinde angeordnet sein.

In dem zweiten Verbindungsabschnitt 106,116 zumindest eines der Verbindungsflachteile 100,110 kann eine Öffnung 108,118 vorgesehen sein. Zumindest eine der Öffnungen 108,118 kann insbesondere ein Durchgangsloch 108,118 sein.

Neben den ersten Verbindungsabschnitten 102,112 und den zweiten Verbindungsabschnitten 106,116 lässt sich ein Leitabschnitt 109,119 definieren. Der Leitabschnitt 109,119 kann beispielsweise die ersten Abschnitte 102,112 mit den zweiten Abschnitten 106,116 verbinden.

Für jedes der Verbindungsflachteile 100,110 lässt sich eine Breitseite 103,113 definieren. Gegenüber der in Figur 1 sichtbaren Breitseite 103,113 befindet sich eine weitere Breitseite, welche im Wesentlichen parallel zu der sichtbaren, oberen Breitseite 103,113 angeordnet sein kann und diese gegenüberliegt. Die Flächenausrichtung der Breitseite 103,113 und oder die Flächenausrichtung der gegenüberliegenden Breitseiten kann im Wesentlichen für ein jeweiliges Verbindungsflachteil 100,110 konstant sein. Auch können die Flächenausrichtungen der aller vier Breitseiten 103,113,etc. der gezeigten zwei Verbindungsflachteile 100,110 im Wesentlichen gleich sein.

Die zumindest zwei Verbindungsflachteile 100,110 können sich in einer gemeinsamen Leiterebene befinden.

Insbesondere überlappen die Breitseiten 103,113 der zumindest zwei Verbindungsflachteile 100,110 einander nicht, sie sind überlappungsfrei. Hiermit kann gemeint sein, dass in der Draufsicht auf die zumindest zwei Verbindungsflachteile 100, 110 in Richtung der Flächennormalen auf zumindest eine Breitseite 103,113 der zumindest zwei Flachteile 100,110 wie in Figur 1 gezeigt, diese überlappungsfrei sind, d. h. voneinander beanstandet sind.

In der gezeigten Ausführungsform lässt sich erkennen, dass zwischen den beiden Verbindungsflachteilen 100,110 ein Spalt besteht. Insbesondere ist der Spalt und/oder der Abstand zwischen den zumindest zwei Verbindungsflachteilen 100,110 entlang der zumindest zwei Verbindungsflachteile 100,110 im Wesentlichen konstant.

Auch lassen sich für die beiden Verbindungsflachteile 100,110 Schmalseiten 107,117 definieren. Die Schmalseiten können beispielsweise im Wesentlichen senkrecht zu den zumindest zwei Breitseiten 103,113 angeordnet sein. Genauer lassen sich äußere Schmalseiten 107a, 117a definieren. Zudem können innere Schmalseiten 107b, 117b definiert werden, welche dem jeweils anderen Verbindungsflachteil 100,110 zugewandt sind.

Die Verbindungsflachteile 100,110 lassen sich in ein langes Verbindungsflachteil 100 und ein kurzes Verbindungsflachteil 110 einteilen. Der erste Verbindungsbereich 112 des kurzen Verbindungsflachteils 110 weist einen geringeren Abstand zu den zweiten Verbindungsabschnitten 106,116 auf, als der Verbindungsabschnitt 102 des langen Verbindungsflachteils 100.

Eines der Verbindungsflachteile 100,110, insbesondere das lange Verbindungsflachteil 100, weist eine Ausnehmung 101 auf. Die Ausnehmung 101 des langen Verbindungsflachteils 100 ist insbesondere in dem Leitabschnitt 109 angeordnet. Es lässt sich erkennen, dass die Breite des Verbindungsflachteils 100 durch die Ausnehmung 101 im Wesentlichen unverändert bleibt. Dies wird dadurch erreicht, dass sowohl die innere Schmalseite 107b als auch die äußere Schmalseite 107a im Bereich der Ausnehmung 101 von dem kurzen Verbindungsflachteil 110 weg geführt ist.

Durch die ersten Verbindungsabschnitte 102,112 lässt sich eine erste Gerade 121 legen. Die die erste Gerade 121 verläuft insbesondere im Wesentlichen durch die Mitte zumindest eines der ersten Verbindungsabschnitte 102,112. Die Mitten können hierbei beispielsweise als der geometrische Schwerpunkt des jeweiligen ersten Verbindungsabschnittes 102,112 definiert werden. Beispielsweise kann die erste Gerade 121 auch durch die Mitte zumindest eines der Anschlussbolzen 104,114 verlaufen. Insbesondere kann die erste Gerade durch eines der Löcher 105,115 eines der Anschlussbolzen 104,114 verlaufen, insbesondere durch dessen Zentrum.

Durch die zweiten Verbindungsabschnitte 106,116 lässt sich eine zweite Gerade 122 legen. Die zweite Gerade 122 verläuft hierbei beispielsweise im Wesentlichen durch die Mittelpunkte der Verbindungsabschnitte 106,116. Beispielsweise kann die Gerade auch durch zumindest eines der Öffnungen 108,118 der ersten Verbindungsabschnitte 106,116 verlaufen, insbesondere durch deren Zentrum.

Die zweiten Verbindungsabschnitte 106, 116 befinden sich jeweils auf gegenüberliegenden Seiten der ersten Gerade 121. In der gezeigten Ausführungsform bestehen keine Überschneidungen zwischen der ersten Geraden 101 und einem der beiden zweiten Verbindungsabschnitte 106,116.

Die ersten Verbindungsabschnitte 101,112 sind auf einer gemeinsamen Seite der zweiten Geraden 122 angeordnet. In der gezeigten Ausführungsform besteht insbesondere keine Überschneidungen zwischen der zweiten Gerade 122 und einem der beiden ersten Anschlussabschnitte 102,112.

Die erste Gerade 121 und die zweite Gerade 122 können sich in einem Schnittpunkt 123 schneiden, insbesondere in der gemeinsamen Leiterebene der zumindest zwei Verbindungsflachteile 100,110. Der Schnittpunkt 123 kann insbesondere in der Leiterebene zwischen dem zweiten Verbindungsabschnitt 106 des ersten Verbindungsflachteils 100 und dem zweiten Verbindungsabschnitt 116 des zweiten Verbindungsflachteils 110 angeordnet sein. Beispielsweise kann, wie gezeigt, der Schnittpunkt 123 der ersten Gerade 121 und der zweiten Gerade 122 im Wesentlichen mittig zwischen dem zweiten Bereich 106 und dem zweiten Bereich 116 angeordnet sein.

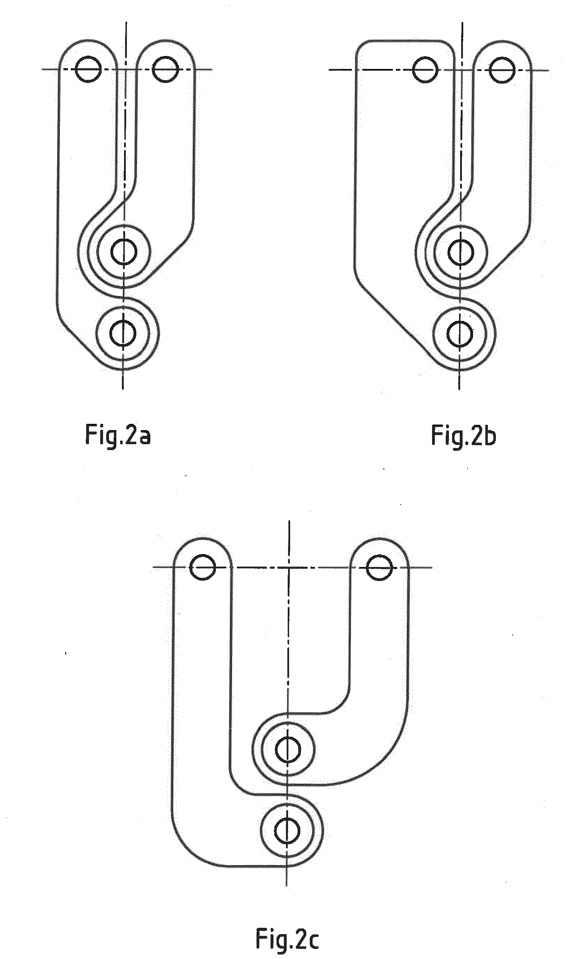

Figur 2 zeigt drei alternative Ausgestaltungen eines gegenständlichen Übergabestützpunktes 1. in Figur 2a lässt sich erkennen, dass das lange Verbindungsflachteil 100 im Bereich der Ausnehmung 101 verschmälert ist. Dies hat gegenüber der Ausführungsform in Figur 1 den Nachteil eines verringerten Leiterquerschnitts des ersten Verbindungsflachteils 100 im Bereich der Ausnehmung 101.

Figur 2b zeigt eine weitere Ausführungsform. In dieser ist der Leiter Querschnitts des langen Flachteils 100 im Bereich des zweiten Verbindungsabschnittes 106 verbreitert im Vergleich zur bevorzugten Ausführungsform in Figur 1 ist mit der Ausführungsform in Figur 2b ein erhöhter Materialeinsatz verbunden.

Figur 2c zeigt schließlich eine Ausführungsform, bei der die beiden Verbindungsflachteile 100,110 im Leitabschnitt und im Bereich der zweiten Verbindungsabschnitte 106,116 nicht in direkter räumlicher Nähe zueinander liegen. Diese Ausführungsform hat gegenüber der in Figur 1 gezeigten den Nachteil eines erhöhten Raumbedarfs und einer geringeren Wärmeübertragung zwischen den zwei Verbindungsflachteilen 100,110 untereinander.

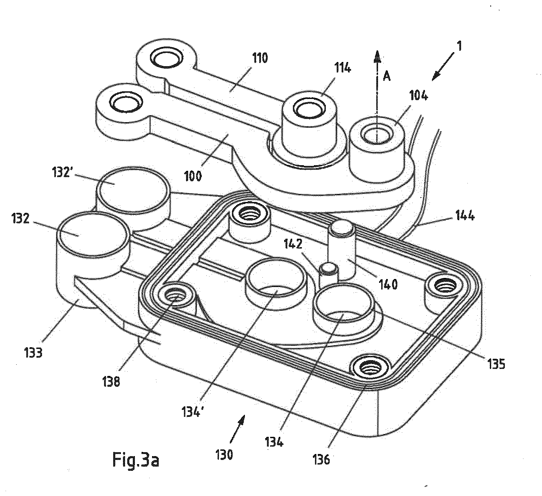

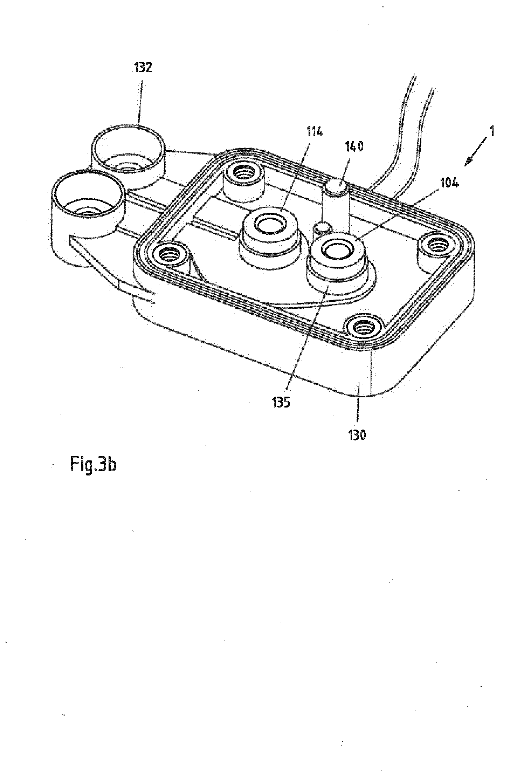

Figur 3 zeigt einen gegenständlichen Übergabestützpunkt 1 umfassend ein Gehäuse 130.

In der dreidimensionalen Ansicht der Verbindungsflachteile 100,110 lässt sich erkennen, dass sich die Anschlussbolzen 104,114 in einer Erstreckungsrichtung A aus der Breitseite 103,113 des jeweiligen Verbindungsflachteils 100,110 erstrecken.

Das Gehäuse 130 kann insbesondere aus einem nicht leitenden Material geformt sein, beispielsweise Kunststoff, Silikon, Keramik und/oder anderen nicht leitende Materialien. Das Gehäuse 103 kann einstückig geformt sein. Insbesondere kann das Gehäuse 130 gegossen und/oder gespritzt sein

Zu erkennen sind erste Öffnungen 134, 134' für die ersten Verbindungsabschnitte 102,112 der zumindest zwei Verbindungsflachteile 100,110. Die ersten Öffnungen 134,134' sind insbesondere zu der in Figur 3a gezeigten oberen Seite des Gehäuses 130 geöffnet. Insbesondere können die Öffnungen 134,134' zur der oberen Seite des Gehäuses 130 gegenüberliegenden unteren Seite des Gehäuses 130 hin geschlossen sein. Um die zweiten Öffnungen 134,134' kann ein Kragen 135 angeordnet sein. Der Kragen 135 kann insbesondere zumindest eine oder die zumindest zwei zweiten Öffnungen 134,134' umlaufend einfassen. Insbesondere kann der Kragen 135 sich im Wesentlichen entlang der Erstreckungsrichtung A zumindest eines der Anschlussbolzen 104,114 erstrecken.

In dem Gehäuse sind zudem zweite Öffnungen 132,132 vorgesehen. Insbesondere sind an dem Gehäuse 130 zweite Öffnungen 132,132' für die zweiten Verbindungsabschnitte 106,116 vorgesehen. Die zweite Öffnungen 132,132' können insbesondere sowohl zu der in Figur 3a gezeigten oberen Seite des Gehäuses 130, als auch zu der dazu gegenüberliegenden unteren Seite des Gehäuses 130 geöffnet sein. Zumindest eine der zweiten Öffnungen 132,132' kann als ein Durchgangsloch gebildet sein. Auf diese Art und Weise wird ermöglicht, dass durch das Gehäuse 130 zumindest einer und/oder die zumindest zwei Seitenbereiche 106,116 von beiden Breitseiten des jeweiligen Verbindungsflachteils 100,110 erreichbar sind. Beispielsweise kann ein Gegenstand, insbesondere eine Schraube, durch zumindest eine der Öffnungen 108,118, welche in einem zweiten Verbindungsabschnitt 106,116 zumindest eines der Verbindungsflachteile 100,110 angeordnet sind, hindurchgeführt werden.

Die zweiten Öffnungen 132,132' können von einem Kragen 133 eingefasst sein. Der Kragen 133 kann sich im Wesentlichen parallel zur Flächennormalen auf die Breitseite 103,113 und/oder parallel zur Erstreckungsrichtung zumindest einer der Öffnungen 108,118 in dem zweiten Verbindungsabschnitt 106,116 zumindest eines der Verbindungsflachteile 100,110 erstrecken.

Das Gehäuse 130 kann zudem zumindest eine Dichtung 136 umfassen. Die Dichtung 136 kann insbesondere zumindest eine, zwei, drei und/oder mehr Rippen aufweisen. Die Dichtung 136 kann insbesondere umlaufend um die zumindest zwei ersten Abschnitte 102,112 angeordnet sein. In einem Ausführungsbeispiel kann die Dichtung 136 mit dem Gehäuse 130 in einem gemeinsamen Prozess, beispielsweise in einem Zwei-Komponenten-Spritzgussverfahren hergestellt werden.

In dem Gehäuse 130 können Befestigungsmittel 138 angeordnet sein. In der gezeigten Ausführungsform sind dies Schraubenaufnahmen 138. Beispielsweise können wie gezeigt in dem Gehäuse Gewinde 138 aus einem Metallwerkstoff eingelassen sein. Auf diese Art und Weise können beispielsweise Schrauben in den Schraubenaufnahmen 138 aufgenommen werden. Dadurch, dass die Schraubenaufnahmen 138 aus einem Metallwerkstoff geformt sind, können diese hohe Kräfte aufnehmen.

Wie sich Figur 3a entnehmen lässt, sind die Befestigungsmittel 138 von der Dichtung 136 umschlossen.

Der gegenständliche Übergabestützpunkt 1 kann ferner zumindest einen Temperatursensor 142 umfassen. Insbesondere kann der zumindest eine Temperatursensor 142 in dem Gehäuse 130 angeordnet sein. Insbesondere kann der Temperatursensor 142 zum Teil von dem Gehäuse 130 umschlossen sein. Zusätzlich und oder alternativ kann der Temperatursensor 142 zumindest teilweise von einer Öffnung des Gehäuses 130 freigelegt sein, wie in Figur 3a gezeigt. Das Gehäuse 130 kann insbesondere einen rezeptiven Bereich des Temperatursensors 142 freilegen. Insbesondere kann ein Kragen den Temperatursensor zumindest teilweise umfassen.

Der Temperatursensor 142 kann insbesondere in räumlicher Nähe zu zumindest einen der zumindest zwei Verbindungsflachteile 100,110 angeordnet sein. Insbesondere kann der Temperatursensor in direkter räumlicher Nähe zu den zumindest zwei ersten Bereichen 102,112 der zumindest zwei Verbindungsflachteile 100,110 angeordnet sein. In Figur 3a lässt sich erkennen, wie der Temperatursensor 142 zwischen den ersten Bereichen 102,112 der zumindest zwei Verbindungsflachteile 100,110 angeordnet ist. Durch die direkte Nähe des Temperatursensors 142 zu sowohl dem ersten Verbindungsflachteil 100 als auch den zweiten Verbindungsflachteil 110 kann die Temperatur beider stromführender Verbindungsflachteile 100,110 mit nur einem Sensor erfasst werden. Der Temperatursensor ist elektrisch von den zumindest zwei Verbindungsflachteilen 100,110 isoliert.

Der gegenständliche Übergabestützpunkt 1 kann zudem eine Sicherung 140 umfassen. Die Sicherung 140 kann die Funktion erfüllen, zumindest eine und/oder die zumindest zwei Verbindungsflachteile 100,110 stromlos zu schalten, falls das Gehäuse 130 unverschlossen ist. Beispielsweise kann dies eine HVIL-Sicherung 140 sein.

Die Sicherung 140 und/oder der Temperatursensor 142 können jeweils zumindest eine Anschlussleitung 144 aufweisen. Diese sind aus dem Gehäuse 133 herausgeführt. Insbesondere können die Leitungen der Sicherung 140 und/oder des Temperatursensors 142 durch das Gehäuse 130 geführt sein, insbesondere in diesem verspritzt und/oder eingegossen sein. Die Anschlussleitungen 144 sind insbesondere auf einer der in Figur 3a gezeigten oberen Seite des Gehäuses 130 abgewandten unteren Seite des Gehäuses 130 aus diesem herausgeführt.

Figur 3b zeigt die Elemente von Figur 3a, nämlich die zumindest zwei Verbindungsflachteile 100,110, sowie das Gehäuse 130. Die Verbindungsflachteile 100,110 sind innerhalb des Gehäuses 130 angeordnet. Es lässt sich erkennen, dass die zweiten Verbindungsabschnitte 106,116 in dem Kragen 132 des Gehäuses 130 versenkt sind. Hiermit kann gemeint sein, dass der Kragen 132 in Richtung der Flächennormalen auf zumindest eine der Breitseiten 103,113 zumindest eines der Verbindungsflachteile 100,110 über die Breitseite 103,113 hinausragt. Insbesondere kann der Kragen 132 zumindest eines und/oder die zumindest zwei Verbindungsflachteile 100,110 beidseitig, d. h. sowohl auf der in Figur 3b gezeigten Oberseite des Gehäuses 130, sowie auf der dieser abgewandten Unterseite des Gehäuses 130 überragen.

Zudem ist zu erkennen, dass die Anschlussbolzen 104,114 über den Kragen 135 des Gehäuses 130 in deren Erstreckungsrichtung A hinausragen.

Die Sicherung 140 kann über zumindest einen der zumindest zwei Anschlussbolzen 104,114 in Erstreckungsrichtung A hinausragen.

Die Verbindungsflachteile 100,110 können in dem Gehäuse 130 eingegossen und/oder verspritzt sein.

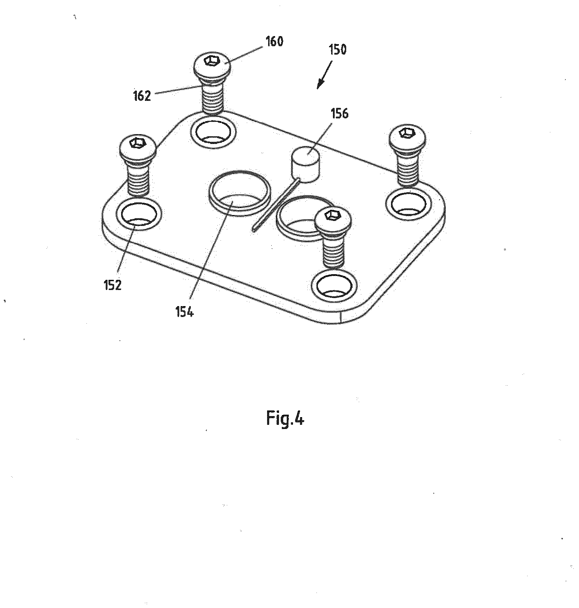

Figur 4 zeigt einen Gehäuseverschluss 150.

Der Gehäuseverschluss 150 kann aus einem nicht leitenden Material geformt sein, beispielsweise Kunststoff, Silikon, Glas, Keramik und/oder anderen nicht leitenden Materialien.

Der Gehäuseverschluss 150 kann Befestigungsmittel 152 aufweisen. In der gezeigten Ausführungsform sind die Befestigungsmittel 152 als Durchführungen 152 für Schrauben 160 geformt. Die Durchführungen 152 sind insbesondere aus einem Metallwerkstoff gebildet. Die Durchführungen 152 sind insbesondere in den Gehäuseverschluss 150 eingelassen.

Der Gehäusedeckel 150 eignet sich dazu auf das Gehäuse 130 in dem in Figur 3 gezeigten oberen Teil des Gehäuses 130 platziert zu werden. Insbesondere kann der Gehäusedeckel 150 auf der Dichtung 136 des Gehäuses 130 aufliegen.

Durch zumindest eine der Durchführungen 152 kann eine Schraube 106 geführt werden. An zumindest einer der Schrauben 160 kann einen Dichtungsring 162 angeordnet sein. Dies kann insbesondere vorteilhaft sein, da die Befestigungsmittel 138 des Gehäuses 130 innerhalb der Dichtung 136 angeordnet sind. Die Dichtungsringe 162 verhindern, dass über die Schraubendurchführungen 152 Feuchtigkeit und/oder andere Umgebungseinflüsse in den Innenraum des Gehäuses 130, welcher von der Dichtung 136 umschlossen ist, gelangen kann.

Der Gehäusedeckel 150 umfasst ferner zumindest eine Öffnung 154, durch welche insbesondere zumindest einer der Anschlussbolzen 104,114 der zumindest zwei Verbindungsflachteile 100,110 geführt werden kann. Zumindest eine oder, wie gezeigt, die beiden Öffnungen 154 können einen Kragen aufweisen, welcher sich beispielsweise im Wesentlichen senkrecht zur ihn umgebenden Fläche des Gehäuseverschlusses 150 und/oder im Wesentlichen parallel zu Erstreckungsrichtung A zumindest eines der Anschlussbolzen 104,114 erstreckt.

Auch zu erkennen ist in Figur 4, dass für die Sicherung 140 eine Aufnahme 156 in dem Gehäusedeckel 150 vorgesehen ist. Die Sicherung 140 kann in die Aufnahme 156 eingreifen, wenn der Gehäuseverschluss 150 auf dem Gehäuse 130 aufliegt. Insbesondere überragt Sicherung 140 die zumindest einen Anschlussbolzen 104,114. Beispielsweise kann die Aufnahme 156 Querschnitts angepasst an einen Teil der Sicherung. 140 sein. Dadurch, dass die Sicherung 140 in die Aufnahme 156 eingeführt wird, wenn der Gehäuseverschluss 150 auf das Gehäuse 130 aufgesetzt wird, ist die Sicherung 140 vor Umwelteinflüssen, insbesondere auch vor hohen Temperaturen im Gehäuseinneren geschützt.

Durch die Befestigungsmittel 152 des Gehäuseverschlusses 150 können, wie oben ausgeführt, beispielsweise Schrauben 160 in die Befestigungsmittel 138, insbesondere in Schraubenaufnahmen 138 des Gehäuses 130 eingeführt werden. Die Befestigungsmittel 138,152,160 können insbesondere einen Anpressdruck zwischen dem Gehäuse 130 und dem Gehäuseverschluss 150 herstellen. Insbesondere kann mittels der Befestigungsmittel 136,152,160 eine Presspassung zwischen zumindest dem Gehäuseverschluss 150 und der Dichtung 136 des Gehäuses 130 hergestellt werden. Der Gehäuseverschluss 150 kann folglich mittelbar über die Dichtung 136 an dem Gehäuse 130 in Presspassung anliegen. Auf diese Weise kann sichergestellt werden, dass der Innenraum des Gehäuses 130 vor Umwelteinflüssen geschützt ist.

Der Gehäuseverschluss 150 kann eine Dichtung umfassen. Die Dichtung kann insbesondere den im Wesentlichen gleichen Verlauf zu der Dichtung 136 des Gehäuses 130 beschreiben. Insbesondere kann die Dichtung des Gehäuseverschlusses 150 die Öffnungen 154 und/oder die Befestigungsmittel 152 umlaufend umfassen. Die Dichtung des Gehäuseverschlusses 150 kann als separates Bauteil ausgeführt sein. Auch möglich ist es, die Dichtung des Gehäuseverschluss 150 gemeinsam mit dem Gehäuseverschluss 150 in einem Zwei-Komponenten-Spritzgussverfahren herzustellen.

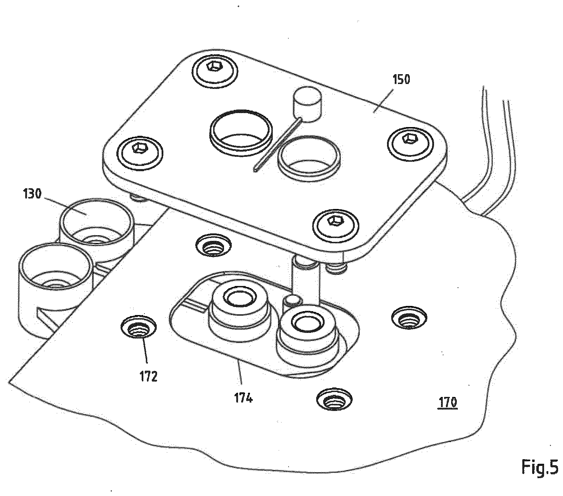

Wie in Figur 5 gezeigt ist, kann zwischen dem Gehäuse 130 und dem Gehäuseverschluss 150 eine Wand 170 angeordnet sein.

Die Wand 170 kann beispielsweise aus einem leitenden Material wie beispielsweise einem Metallwerkstoff, beispielsweise Aluminium, Kupfer und/oder anderer Metallmaterialien und/oder Legierungen hieraus geformt sein. Auch möglich ist es, die Wand 170 aus einem nicht leitenden Material zu formen, beispielsweise aus Kunststoff, Keramik, Glas und/oder weiteren nicht leitender Werkstoffe.

Die Wand 170 kann insbesondere zumindest eine Ausnehmung 172 umfassen. Zumindest eine der Ausnehmungen 172 kann derart positioniert sein, dass sie mit einem Befestigungsmittel 138 des Gehäuses 130 und/oder einem Befestigungsmittel 152 des Gehäuseverschlusses 150 fluchtet. Insbesondere kann sich zumindest eine der Ausnehmungen 172 dazu eignen, eine Schraube 160 durch sie hindurch zu führen. Auch können mehrere Ausnehmungen 182 vorgesehen sein, beispielsweise, wie in Figur 5 gezeigt, vier Ausnehmungen 172.

Die Wand 170 kann eine Öffnung 174 umfassen. Die Öffnungen 174 kann derart in der Wand 170 positioniert sein, dass durch sie die ersten Anschlussbereiche 102,112 des gegenständlichen Übergabestützpunktes 1 erreichbar sind. Auch kann die Öffnung 132 erlauben, durch sie die Sicherung 140 und/oder den Temperatursensor 142 zu führen. In einem Ausführungsbeispiel umfasst die Öffnung 174 die zumindest zwei Anschlussbolzen 104,114 des gegenständlichen Übergabestützpunktes 1. Insbesondere kann zumindest einer und/oder die zumindest zwei Anschlussbolzen 104,114 durch die Wand 170 im Bereich der Öffnung 174 hindurch geführt sein.

Die Größe der Öffnung 174 der Wand 170 ist insbesondere kleiner als der Bereich des Gehäuses 130, welcher von der Dichtung 136 umfasst ist. Insbesondere liegt die Dichtung 136 des Gehäuses 130 im Wesentlichen durchgängig entlang der Dichtung 136 an der Wand 170 an. Zwischen der Dichtung 136 des Gehäuses 130 und der Wand 170 lässt sich so eine im wesentlichen gasdichte, flüssigkeitsdichte und/oder druckdichte Verbindung herstellen.

Der Gehäusedeckel 150 kann zumindest teilweise mit der Wand 170 kontaktieren. Insbesondere kann der Gehäusedeckel 150 in einem die Ausnehmungen 172 umlaufend einschließenden Bereich kontaktieren. Beispielsweise kann der Gehäuseverschluss 150 mittels einer Dichtung des Gehäuseverschlusses 150 auf der Wand 170 anliegen.

Mittels der Befestigungsmittel 138,152,160 kann insbesondere eine Presspassung zwischen einerseits dem Gehäusedeckel 150 und der Wand 170 und/oder andererseits zwischen dem Gehäuse 130 und der Wand 170 hergestellt werden. Insbesondere kann zwischen der Wand 170 und dem Gehäuse 130 eine Dichtung 136 angeordnet sein, insbesondere in Presspassung. Zwischen der Wand 170 und dem Gehäuseverschluss 150 kann eine Dichtung angeordnet sein, insbesondere in Presspassung.

Die Wand 170 kann beispielsweise eine Sicherungsfunktion übernehmen. Beispielsweise kann die Wand 170 Teil eines einen Energiespeicher einschließenden Bereichs, beispielsweise in einem Fahrzeug, bilden. Die Wand 170 kann folglich eine räumliche Trennung zwischen einem Energiespeicher und einer restlichen Energieversorgungsstruktur bereitstellen.

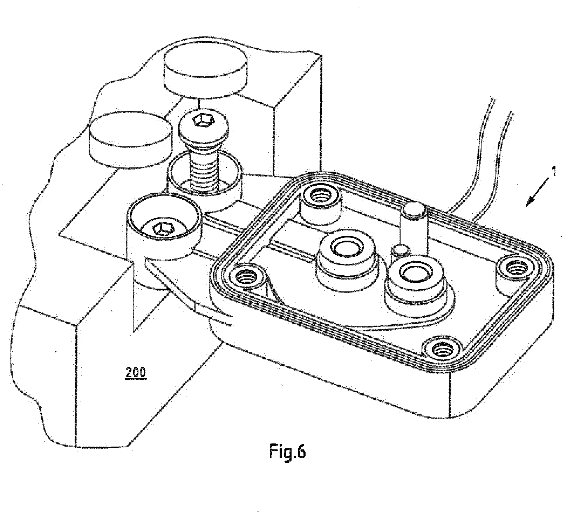

Figur 6 zeigt eine Anwendung des gegenständlichen Übergabestützpunktes 1 an einem Energiespeicher 200.

Zu erkennen ist die richtungsverändernde Funktion des Übergabestützpunktes 1. auch lässt sich erahnen, wie der Energiespeicher 200 von einer Wand 170 (nicht gezeigt) umschlossen werden kann.

## Patentansprüche

1. Elektrischer Übergabestützpunkt (1) für Kraftahrzeuge mit
- zumindest zwei aus einem metallischen Werkstoff gebildeten Verbindungsflachteilen (100, 110),
- wobei sich die Verbindungsflachteile (100, 110) zumindest teilweise in einer gemeinsamen Leiterebene erstrecken,
- wobei die Verbindungsflachteile (100, 110) jeweils einen ersten (102,112) und einen zweiten Verbindungsabschnitt (106, 116) aufweisen, derart,
- dass die ersten Verbindungsabschnitte (102, 112) entlang einer gemeinsamen, sich in der Leiterebene erstreckenden ersten Geraden (121) angeordnet sind, und,
- dass die zweiten Verbindungsabschnitte (106, 116) entlang einer gemeinsamen, sich in der Leiterebene erstreckenden zweiten Geraden (122) angeordnet sind,
**dadurch gekennzeichnet,**
- **dass** die ersten Verbindungsabschnitte (102, 112) auf einer gemeinsamen Seite der zweiten Geraden (122) angeordnet sind und
- **dass** die zweiten Verbindungsabschnitte (106, 116) auf einander gegenüberliegenden Seiten der ersten Geraden (121) angeordnet sind.

2. Elektrischer Übergabestützpunkt (1) für Kraftahrzeuge nach Anspruch 1,
**dadurch gekennzeichnet, dass**
- die zumindest zwei Verbindungsflachteile (100, 110) sich in einer Längsrichtung erstrecken, insbesondere, dass
- sich die zumindest zwei Verbindungsflachteile (100, 110) von einem gemeinsamen ersten distalen Ende hin zu einem gemeinsamen zweiten distalen Ende erstrecken, wobei insbesondere die ersten Verbindungsabschnitte (102, 112) an dem ersten distalen Ende angeordnet sind und/oder die zweiten Verbindungsabschnitte (106, 116) an dem zweiten distalen Ende angeordnet sind.

3. Elektrischer Übergabestützpunkt (1) für Kraftahrzeuge nach einem der vorangehenden Ansprüche,
**dadurch gekennzeichnet, dass**
- zumindest ein erstes der zumindest zwei Verbindungsflachteile (100, 110) eine Ausnehmung (101) aufweist, in die ein zweites der Verbindungsflachteile (100, 110) eingreift, insbesondere der erste Verbindungsabschnitt (102, 112) des zweiten Verbindungsflachteils (110), wobei insbesondere der erste Verbindungsabschnitt (102, 112) des zweiten Verbindungsflachteils (110) näher an zumindest einem der zweiten Verbindungsabschnitte (106, 116) der Verbindungsflachteile (100, 110) als der erste Verbindungsabschnitt (102, 112) des ersten Verbindungsflachteils (100) angeordnet ist.

4. Elektrischer Übergabestützpunkt (1) für Kraftahrzeuge nach einem der vorangehenden Ansprüche,
**dadurch gekennzeichnet, dass**
- die Verbindungsflachteile (100, 110) entlang einander zugewandten Schmalseiten (107, 117) der Verbindungsflachteile (100, 110) zumindest teilweise einen im Wesentlichen konstanten Abstand voneinander aufweisen.

5. Elektrischer Übergabestützpunkt (1) für Kraftahrzeuge nach einem der vorangehenden Ansprüche,
**dadurch gekennzeichnet, dass**
- die erste Gerade (121) im Wesentlichen senkrecht zu der zweiten Gerade (122) ausgerichtet ist, und/oder dass
- die erste Gerade (121) und die zweite Gerade (122) einander in der Leiterebene kreuzen, insbesondere zwischen den zweiten Verbindungsabschnitten (106, 116) und/oder
- die zweiten Verbindungsabschnitte (106, 116) im Wesentlichen gleich weit von der ersten Geraden (121) entfernt sind.

6. Elektrischer Übergabestützpunkt (1) für Kraftahrzeuge nach einem der vorangehenden Ansprüche,
**dadurch gekennzeichnet, dass**
- zumindest eines der Verbindungsflachteile (100, 110) aus Aluminium, Kupfer, E-Kupfer und/oder Kombinationen hieraus geformt ist und/oder
- zumindest eines der Verbindungsflachteile (100, 110) beschichtet ist, insbesondere metallisch beschichtet, insbesondere mit Silber, Gold, Nickel, Kombinationen hiervon und/oder mit mehreren Schichten, insbesondere mit unternickeltem Silber.

7. Elektrischer Übergabestützpunkt (1) für Kraftahrzeuge nach einem der vorangehenden Ansprüche,
**dadurch gekennzeichnet, dass**
- zumindest eines der Verbindungsflachteile (100, 110) geschmiedet ist.

8. Elektrischer Übergabestützpunkt (1) für Kraftahrzeuge nach einem der vorangehenden Ansprüche,
**dadurch gekennzeichnet, dass**
- die Verbindungsflachteile (100, 110) in zumindest einem der Verbindungsabschnitte (102, 112) eine Durchgangsöffnung aufweisen und/oder
- zumindest an einem, vorzugsweise in zumindest zwei der ersten Verbindungsabschnitte (102, 112) jeweils ein Anschlussbolzen (104, 114) angeordnet ist, insbesondere ein Anschlussbolzen (104, 114) mit einem Loch (105, 115), insbesondere ein Anschlussbolzen (104, 114) mit einem Sackloch, insbesondere ein Anschlussbolzen mit einem Sackloch mit einem Gewinde (138), wobei der Anschlussbolzen (104, 114) bevorzugt in der Durchgangsöffnung angeordnet ist.

9. Elektrischer Übergabestützpunkt (1) für Kraftahrzeuge nach einem der vorangehenden Ansprüche,
**dadurch gekennzeichnet, dass**
- ein gemeinsames Gehäuse (130) die zumindest zwei Verbindungsflachteile (100, 110) zumindest teilweise umgibt, insbesondere, dass die zumindest zwei Verbindungsflachteile (100, 110) zumindest teilweise von einem gemeinsamen Gehäuse (130) umspritzt sind, insbesondere dass
- an dem Gehäuse (130) zumindest eine Dichtung (136) angeordnet ist, insbesondere umlaufend um die ersten Verbindungsabschnitte (102, 112) und/oder umlaufend um die zweiten Verbindungsabschnitte (106, 116).

10. Elektrischer Übergabestützpunkt (1) für Kraftahrzeuge nach Anspruch 9,
**dadurch gekennzeichnet, dass**
- das Gehäuse (130) einen Gehäuseverschluss (150) aufweist, wobei der Gehäuseverschluss (150) insbesondere umlaufend um die ersten Verbindungsabschnitte (102, 112) mit dem Gehäuse (130) in Kontakt steht, insbesondere mittelbar über eine Dichtung (136) und/oder
- dass der Gehäuseverschluss (150) eine Dichtung (136) umfasst, insbesondere eine umlaufend um die ersten Abschnitt (102, 112) angeordnete Dichtung (136), insbesondere dass sowohl der Gehäuseverschluss (150) als auch das Gehäuse (130) zumindest eine Dichtung (136) aufweisen.

11. Elektrischer Übergabestützpunkt (1) für Kraftahrzeuge nach einem der vorangehenden Ansprüche 9 oder 10,
**dadurch gekennzeichnet, dass**
- an dem Gehäuse (130) zumindest ein Befestigungsmittel (138, 152, 160) angeordnet ist, insbesondere ein Gewinde (138) für eine Schraube (160), insbesondere ein Gewinde (130) aus einem Metallwerkstoff, insbesondere dass das Befestigungsmittel eine Schraube mit einem Dichtring umfasst.

12. Elektrischer Übergabestützpunkt (1) für Kraftahrzeuge nach einem der vorangehenden Ansprüche 10 bis 11,
**dadurch gekennzeichnet, dass**
- an dem Gehäuseverschluss (150) zumindest ein Befestigungsmittel (138 152, 160) angeordnet ist, insbesondere ein Loch (105, 115), insbesondere eine Durchführung (152), insbesondere aus einem Metallwerkstoff, wobei insbesondere eine Dichtung (136) zwischen dem Gehäuseverschluss (150) und dem Gehäuse (130) mittels des zumindest einen Befestigungsmittels (138 152, 160) angeordnet in Presspassung befestigt werden kann.

13. Elektrischer Übergabestützpunkt (1) für Kraftahrzeuge nach einem der vorangehenden Ansprüche,
**dadurch gekennzeichnet, dass**
- dieser zumindest einen Temperatursensor (142) und/oder eine Sicherung (140) umfasst, insbesondere innerhalb des Gehäuses (130).

14. Elektrischer Übergabestützpunkt (1) für Kraftahrzeuge nach einem der vorangehenden Ansprüche 10 bis 13,
**dadurch gekennzeichnet, dass**
- eine Wand (170) zwischen dem Gehäuse (130) und dem Gehäuseverschluss (150) angeordnet ist, wobei insbesondere zumindest eines der Haltemittel den Gehäuseverschluss (150) mittelbar über die Wand (170) an dem Gehäuse (130) hält und insbesondere der Übergang zwischen dem Gehäuseverschluss (150) und der Wand (170) und/oder der Übergang zwischen dem Gehäuse (130) und der Wand (170) zumindest im Wesentlichen gasdicht, flüssigkeitsdicht und/oder druckdicht ist, insbesondere
- dass die Wand (170) zumindest eine Ausnehmung (172) aufweist, durch die insbesondere ein Befestigungsmittel (136 152, 160) durchführbar ist, insbesondere eine Schraube (160).

15. Elektrischer Übergabestützpunkt (1) für Kraftahrzeuge nach Anspruch 14,
**dadurch gekennzeichnet, dass**
- dass die Wand (170) aus einem Metallwerkstoff und/oder aus einem Kunststoff geformt ist.

## Claims

1. Electrical transfer tab (1) for motor vehicles having
- at least two connecting flat parts (100, 110) formed from a metallic material,
- wherein the connecting flat parts (100, 110) extend at least partially in a common conductor plane,
- wherein the connecting flat parts (100, 110) each have a first (102, 112) and a second (106, 116) connecting section, such that
- that the first connecting sections (102, 112) are arranged along a common first straight line (121) extending in the conductor plane, and,
- that the second connecting sections (106, 116) are arranged along a common second straight line (122) extending in the conductor plane,
**characterised in that**
- that the first connecting sections (102, 112) are arranged on a common side of the second straight line (122), and
- that the second connecting sections (106, 116) are arranged on opposite sides of the first straight line (121).

2. Electrical transfer tab (1) for motor vehicles according to claim 1,
**characterised in that**
- the at least two connecting flat parts (100, 110) extend in a longitudinal direction in particular that
- the at least two connecting flat parts (100, 110) extend from a common first distal end to a common second distal end, wherein in particular the first connecting sections (102, 112) are arranged at the first distal end and/or the second connecting sections (106, 116) are arranged at the second distal end.

3. Electrical transfer tab (1) for motor vehicles according to any one of the preceding claims,
**characterised in that**
- at least a first one of the at least two connecting flat parts (100, 110) has a recess (101) in which a second one of the connecting flat parts (100, 110) engages, in particular the first connecting section (102, 112) of the second connecting flat part (110), wherein in particular the first connecting section (102, 112) of the second connecting flat part (110) is arranged closer to at least one of the second connecting sections (106, 116) of the connecting flat parts (100, 110) than the first connecting section (102, 112) of the first connecting flat part (100).

4. Electrical transfer tab (1) for motor vehicles according to any one of the preceding claims,
**characterised in that**
- the connecting flat parts (100, 110) are at least partly at a substantially constant distance from each other along mutually facing narrow sides (107, 117) of the connecting flat parts (100, 110).

5. Electrical transfer tab (1) for motor vehicles according to any one of the preceding claims,
**characterised in that**
- the first straight line (121) is oriented substantially perpendicular to the second straight line (122) and/or
- the first straight line (121) and the second straight line (122) cross each other in the conductor plane, in particular between the second connecting sections (106, 116) and/or
- the second connecting sections (106, 116) are substantially equidistant from the first straight line (121).

6. Electrical transfer tab (1) for motor vehicles according to any one of the preceding claims,
**characterised in that**
- at least one of the connecting sections is formed of aluminium, copper, E-copper and/or combinations thereof and/or
- at least one of the connecting flat parts (100, 110) is coated, in particular metallically coated, in particular with silver, gold, nickel, combinations thereof and/or with several layers, in particular with sub-nickel-plated silver.

7. Electrical transfer tab (1) for motor vehicles according to any one of the preceding claims,
**characterised in that**
- at least one of the connecting flat parts (100, 110) is forged.

8. Electrical transfer tab (1) for motor vehicles according to any one of the preceding claims,
**characterised in that**
- the connecting flat parts (100, 110) have a through-opening in at least one of the connecting sections (102, 112), and/or
- a connecting bolt (104, 114) is arranged in each case at least on one, preferably in at least two, of the first connecting sections (102, 112), in particular a connecting bolt (104, 114) with a hole (105, 115), in particular a connecting bolt (104, 114) with a blind hole, in particular a connecting bolt with a blind hole with a thread (138), the connecting bolt (104, 114) preferably being arranged in the through-opening.

9. Electrical transfer tab (1) for motor vehicles according to any one of the preceding claims,
**characterised in that**
- a common housing (130) at least partially surrounds the at least two connecting flat parts (100, 110), in particular that the at least two connecting flat parts (100, 110) are at least partially moulded by a common housing (130) in particular that
- at least one seal is arranged on the housing (130), in particular circumferentially around the first connecting sections (102, 112) and/or circumferentially around the second connecting sections (106, 116).

10. Electrical transfer tab (1) for motor vehicles according to claim 9,
**characterised in that**
- the housing (130) has a housing closure (150), the housing closure (150) being in contact with the housing (130), in particular indirectly via a seal, in particular circumferentially around the first connecting sections (102, 112), and/or
- **in that** the housing closure (150) comprises a seal (136), in particular a seal (136) arranged circumferentially around the first connecting sections (102, 112), in particular **in that** both the housing closure (150) and the housing (130) have at least one seal (136).

11. Electrical transfer tab (1) for motor vehicles according to any one of the preceding claims 9 or 10,
**characterised in that**
- at least one fastening means is arranged on the housing (130), in particular a thread (138) for a screw (160), in particular a thread (138) made of a metal material in particular that the fastening means comprises a screw with a sealing ring.

12. Electrical transfer tab (1) for motor vehicles according to any one of the preceding claims 10 to 11,
**characterised in that**
- at least one fastening means (138, 152) is arranged on the housing closure (150), in particular a hole (105, 115), in particular a through hole (152), in particular made of a metal material, wherein in particular a seal (136) can be fastened between the housing closure (150) and the housing (130) by means of the at least one fastening means (138, 152) in an interference fit.

13. Electrical transfer tab (1) for motor vehicles according to any one of the preceding claims,
**characterised in that**
- it comprises at least one temperature sensor (142) and/or a fuse (140), in particular inside the housing (130).

14. Electrical transfer tab (1) for motor vehicles according to any one of the preceding claims 10 to 13,
**characterised in that**
- a wall (170) is arranged between the housing (130) and the housing closure (150), wherein in particular at least one of the holding means holds the housing closure (150) to the housing (130) indirectly via the wall (170) and in particular the transition between the housing closure (150) and the wall (170) and/or the transition between the housing (130) and the wall (170) is at least substantially gas-tight, liquid-tight and/or pressure-tight in particular that
- the wall (170) has at least one recess (172) through which, in particular, a fastening means (136, 152, 160) can be passed, in particular a screw (160).

15. Electrical transfer tab (1) for motor vehicles according to claim 14,
**characterised in that**
- **in that** the wall (170) is formed from a metal material and/or from a plastic material.

## Revendications

1. Point de raccordement électrique (1) pour des véhicules à moteur, avec
- au moins deux pièces plates de raccordement (100, 110) en matériau métallique,
- où les pièces plates de raccordement (100, 110) s'étendent au moins partiellement dans un plan conducteur commun,
- où les pièces plates de raccordement (100, 110) comportent chacune une première (102, 112) et une deuxième section de raccordement (106, 116), de telle sorte
- que les premières sections de raccordement (102, 112) sont disposées le long d'une première ligne droite commune (121) s'étendant dans le plan conducteur, et,
- que les deuxièmes sections de raccordement (106, 116) sont disposées le long d'une deuxième ligne droite commune (122) s'étendant dans le plan conducteur,
**caractérisé en ce que**
- les premières sections de raccordement (102, 112) sont disposées sur un côté commun de la deuxième ligne droite (122) et
- les deuxièmes sections de raccordement (106, 116) sont disposées sur des côtés opposés de la première ligne droite (121).

2. Point de raccordement électrique (1) pour véhicules à moteur selon la revendication 1,
**caractérisé en ce que**
- les au moins deux pièces plates de raccordement (100, 110) s'étendent dans une direction longitudinale, en particulier que
- les au moins deux pièces plates de raccordement (100, 110) s'étendent d'une première extrémité distale commune vers une deuxième extrémité distale commune, où les premières sections de raccordement (102, 112) sont en particulier disposées à la première extrémité distale et/ou les deuxièmes sections de raccordement (106, 116) sont disposées à la deuxième extrémité distale.

3. Point de raccordement électrique (1) pour véhicules automobiles selon l'une des revendications précédentes,
**caractérisé en ce que**
- au moins une première des deux pièces plates de raccordement (100, 110) a un évidement (101) dans lequel s'engage une deuxième des pièces plates de raccordement (100, 110), en particulier la première section de raccordement (102, 112) de la deuxième pièce plate de raccordement (110), où le premier segment de raccordement (102, 112) de la deuxième pièce plate de raccordement (110) est disposé plus près d'au moins un des deuxièmes segments de raccordement (106, 116) des pièces plates de raccordement (100, 110) que le premier segment de raccordement (102, 112) de la première section de raccordement plate (100).

4. Point de raccordement électrique (1) pour véhicules motorisés selon l'une des revendications précédentes,
**caractérisé en ce que**
- les pièces plates de raccordement (100, 110) ont, le long de leurs côtés étroits (107, 117) tournés l'un vers l'autre, au moins partiellement un écartement essentiellement constant.

5. Point de raccordement électrique (1) pour véhicules automobiles selon l'une des revendications précédentes,
**caractérisé en ce que**
- la première ligne droite (121) est orientée essentiellement perpendiculairement à la deuxième ligne droite (122), et/ou que
- la première ligne droite (121) et la deuxième ligne droite (122) se croisent dans le plan conducteur, en particulier entre les deuxièmes sections de raccordement (106, 116) et/ou
- les deuxièmes sections de raccordement (106, 116) sont essentiellement équidistantes de la première ligne droite (121).

6. Point de raccordement électrique (1) pour véhicules électriques selon l'une des revendications précédentes,
**caractérisé en ce que**
- au moins l'une des pièces plates de raccordement (100, 110) est formée d'aluminium, de cuivre, de E-cuivre et/ou de combinaisons de ceux, et/ou
- au moins l'une des pièces plates de raccordement (100, 110) est revêtue, en particulier de manière métallique, en particulier d'argent, d'or, de nickel, de combinaisons de ces métaux et/ou de plusieurs couches, en particulier d'argent sur nickel.

7. Point de raccordement électrique (1) pour véhicules à moteur selon l'une des revendications précédentes,
**caractérisée en ce que**
- au moins l'une des pièces plates de raccordement (100, 110) est forgée.

8. Point de raccordement électrique (1) pour véhicules à moteur selon l'une des revendications précédentes,
**caractérisé en ce que**
- les pièces plates de raccordement (100, 110) ont une ouverture de passage dans au moins l'une des sections de raccordement (102, 112) et/ou
- au moins un boulon de raccordement (104, 114) est disposé dans au moins l'une des premières sections de raccordement (102, 112), de préférence dans au moins deux d'entre elles, en particulier un boulon de raccordement (104, 114) avec un trou (105, 115), en particulier un boulon de raccordement (104, 114) avec un trou borgne, en particulier un boulon de raccordement avec un trou borgne fileté (138), où le boulon de raccordement (104, 114) est de préférence disposé dans l'ouverture de passage.

9. Point de raccordement électrique (1) pour véhicules à moteur selon l'une des revendications précédentes,
**caractérisé en ce que**
- un boîtier commun (130) entoure au moins partiellement les deux pièces plates de raccordement (100, 110), en particulier les deux pièces plates de raccordement (100, 110) sont au moins partiellement enrobées par extrusion d'un boîtier commun (130), en particulier que
- au moins un joint (136) est disposé sur le boîtier (130), en particulier de manière périphérique autour des premières sections de raccordement (102, 112) et/ou de manière périphérique autour des deuxièmes sections de raccordement (106, 116).

10. Point de raccordement électrique (1) pour véhicules automobiles selon la revendication 9,
**caractérisé en ce que**
- le boîtier (130) comporte une fermeture de boîtier (150), où la fermeture de boîtier (150) est en contact avec le boîtier (130) en particulier autour les premières sections de raccordement (102, 112), en particulier indirectement par l'intermédiaire d'un joint (136) et/ou
- que la fermeture du boîtier (150) comprend un joint (136), en particulier un joint (136) disposé autour la première section (102, 112), en particulier que la fermeture du boîtier (150) et le boîtier (130) ont au moins un joint (136).

11. Point de raccordement électrique (1) pour véhicules à moteur selon l'une des revendications 9 ou 10 précédentes,
**caractérisé en ce que**
- au moins un moyen de fixation (138, 152, 160) est disposé sur le boîtier (130), en particulier un filetage (138) pour une vis (160), en particulier un filetage (130) en matériau métallique, en particulier que le moyen de fixation comprend une vis avec un joint d'étanchéité.

12. Point de raccordement électrique (1) pour véhicules à moteur selon l'une des revendications 10 à 11 précédentes,
**caractérisé en ce que**
au moins un moyen de fixation (138, 152, 160) est disposé sur la fermeture du boîtier (150), en particulier un trou (105, 115), en particulier un passage (152), en particulier en matériau métallique, où en particulier un joint (136) peut être fixé entre la fermeture de boîtier (150) et le boîtier (130) au moyen du au moins un moyen de fixation (138, 152, 160) disposé en ajustement serré.

13. Point de raccordement électrique (1) pour véhicules à moteur selon l'une des revendications précédentes,
**caractérisé en ce que**
celui-ci comprend au moins un capteur de température (142) et/ou un fusible (140), en particulier à l'intérieur du boîtier (130).

14. Point de raccordement électrique (1) pour véhicules à moteur selon l'une des revendications 10 à 13 précédentes,
**caractérisé en ce que**
une paroi (170) est disposée entre le boîtier (130) et la fermeture de boîtier (150), où au moins l'un des moyens de fixation maintient la fermeture de boîtier (150) indirectement sur le boîtier (130) par l'intermédiaire de la paroi (170), et en particulier la jonction entre la fermeture de boîtier (150) et la paroi (170) et/ou la jonction entre le boîtier (130) et la paroi (170) est au moins essentiellement étanche aux gaz, étanche aux liquides et/ou à la pression, en particulier
- que la paroi (170) a au moins un évidement (172) à travers lequel on peut faire passer en particulier un moyen de fixation (136, 152, 160), en particulier une vis (160).

15. Point de raccordement électrique (1) pour véhicules à moteur selon la revendication 14,
**caractérisé en ce que**
- la paroi (170) est formée d'un matériau métallique et/ou d'une matière plastique.
